# EUROPEAN PATENT SPECIFICATION

(11) **EP 4 221 274 B1**
(45) Date of publication and mention of the grant of the patent: **30.04.2025**
(21) Application number: 22783851.3
(22) Date of filing: 16.03.2022
(51) Int. Cl.: H04W 4/70, H04W 4/46, H04B 7/155, G01S 13/87, G01S 7/00, H04B 7/04, H04W 88/04

(54) **METHOD FOR COLLABORATIVE SENSING, ELECTRONIC DEVICE, AND READABLE STORAGE MEDIUM**
VERFAHREN ZUR KOLLABORATIVEN ERFASSUNG, ELEKTRONISCHE VORRICHTUNG UND LESBARES SPEICHERMEDIUM
PROCÉDÉ DE DÉTECTION COLLABORATIVE, DISPOSITIF ÉLECTRONIQUE ET SUPPORT D'ENREGISTREMENT LISIBLE

(30) Priority: 08.04.2021 CN 202110377256
(43) Date of publication of application: 02.08.2023
(73) Proprietor: Honor Device Co., Ltd., Shenzhen, Guangdong 518040 (CN)
(72) Inventor: ZHUANG, Hongcheng, Shenzhen, Guangdong 518040 (CN)
(74) Representative: Epping - Hermann - Fischer
(86) International application number: PCT/CN2022/081272
(87) International publication number: WO 2022/213782

(56) References cited:
- CN-A- 111 010 219
- CN-A- 111 912 409
- CN-A- 111 983 560
- CN-A- 112 073 092
- CN-A- 112 100 572
- QINGQING WU ET AL: "5G-and-Beyond Networks with UAVs: From Communications to Sensing and Intelligence", ARXIV.ORG, CORNELL UNIVERSITY LIBRARY, 201 OLIN LIBRARY CORNELL UNIVERSITY ITHACA, NY 14853, 19 October 2020 (2020-10-19), XP081788678
- DE LIMA CARLOS ET AL: "Convergent Communication, Sensing and Localization in 6G Systems: An Overview of Technologies, Opportunities and Challenges", IEEE ACCESS, IEEE, USA, vol. 9, 21 January 2021 (2021-01-21), pages 26902 - 26925, XP011838045, DOI: 10.1109/ACCESS.2021.3053486

## Description

This application claims priority to Chinese Patent Application No. 202110377256.4, filed with the China National Intellectual Property Administration on April 8, 2021 and entitled "COLLABORATIVE SENSING METHOD, ELECTRONIC DEVICE, AND READABLE STORAGE MEDIUM' .

### TECHNICAL FIELD

Embodiments of this application relate to the integrated communication and sensing technology, and in particular, to a collaborative sensing method, an electronic device, and a readable storage medium.

### BACKGROUND

In integrated communication and sensing (integrated communication and sensing, ICS), an electronic device can communicate with and sense another device. For example, the electronic device can sense the distance, size, moving speed, and the like of the another device. For example, during communication between a first device and a target, when the first device senses that the distance between the first device and the target becomes larger, the first device may increase signal transmit power to allow the target to smoothly receive a signal from the first device.

If the distance between the first device and the target to be sensed is very large or there is an obstacle between the first device and the target, the first device fails to sense the target or senses part of the target. At present, the first device may perform collaborative sensing with a second device. That is, the first device may sense the target through the second device. The first device sends a sensing signal to the second device. The second device processes the sensing signal, and forwards the sensing signal to the target in a next slot. After receiving the sensing signal, the target may feed back an echo signal to the first device through the second device. The first device may obtain a sensing result of the target based on the echo signal.

In the existing collaborative sensing solution, it takes a long time for the second device to respond to the sensing signal and the second device can only forward the sensing signal to the target in the next slot, resulting in a long delay in sensing the target by the first device and low efficiency of collaborative sensing.

QINGQING WU ET AL: "5G-and-Beyond Networks with UAVs: From Communications to Sensing and Intelligence", ARXIV.ORG, CORNELL UNIVERSITY LIBRARY, 201 OLIN LIBRARY CORNELL UNIVERSITY ITHACA, NY 14853 provides a comprehensive overview on the integration of UAVs into 5G-and-beyond networks.

### SUMMARY

Embodiments of this application provide a collaborative sensing method, an electronic device, and a readable storage medium as defined in the claims, which can improve the efficiency of collaborative sensing.

According to a first aspect, an embodiment of this application provides a collaborative sensing method, where a second device includes a reconfigurable intelligent surface RIS, and the method includes: sensing, by a first device, a target in collaboration with the second device based on a RIS capability of the second device. The RIS capability is a RIS reflection capability and/or a RIS refraction capability.

When the RIS capability is the RIS reflection capability, the second device supports reflection of a sensing signal from the first device to the target. Compared with the related art, the second device does not need to process the sensing signal from the first device, but instead directly reflects the sensing signal to the target. The sensing delay is short, so that the efficiency of collaborative sensing can be improved. When the RIS capability is the RIS refraction capability, the second device supports generation of the sensing signal and sending of the sensing signal to the target. Compared with the related art, the second device does not need to act as an intermediate apparatus for forwarding the sensing signal between the first device and the target, but instead generates the sensing signal and sends the sensing signal to the target. The sensing delay is short, so that the efficiency of collaborative sensing can be improved. When the RIS capability is the RIS reflection capability and the RIS refraction capability, the second device may be based on the RIS reflection capability, and the efficiency of collaborative sensing can also be improved.

In an embodiment, the RIS capability does not support the RIS, and in this manner, the first device may not perform collaborative sensing with the second device based on the RIS capability. The following embodiment mainly describes a solution in which the first device performs collaborative sensing with the second device based on the RIS capability.

In a possible implementation, a RIS capability of at least one second device may be stored in the first device, where the RIS capability of the second device is reported by the second device to the first device.

The second device needs to perform beamforming on the RIS, and the RIS can implement the RIS reflection capability and/or the RIS refraction capability. The second device may use a RIS parameter to perform beamforming on the RIS, where the RIS parameter is related to the RIS capability. For example, when the RIS capability is the RIS reflection capability, the RIS parameter is a RIS reflection parameter; when the RIS capability is the RIS refraction capability, the RIS parameter is a RIS refraction parameter; and when the RIS capability is the RIS reflection capability and the RIS refraction capability, the RIS parameter includes the RIS reflection parameter and the RIS refraction parameter. In an embodiment, the RIS includes a plurality of antenna units, and the RIS parameter may include phases and amplitudes of the antenna units in the RIS.

Before the sensing, by a first device, a target in collaboration with the second device, the first device sends control information to the second device based on the RIS capability; and the second device performs beamforming on the RIS based on the control information, where a beam of the RIS after the beamforming points at the target. The second device obtains a RIS parameter based on the control information, where the RIS parameter is related to the RIS capability. The second device performs beamforming on the RIS based on the RIS parameter.

Manner 1: The first device obtains the RIS parameter, and adds the RIS parameter to the control information.

The control information includes the RIS parameter, so that the second device can obtain the RIS parameter after receiving the control information. The RIS parameter in the control information is obtained by the first device based on information about the target, and the information about the target includes an identifier, an orientation, or a location of the target. That is, before the first device sends the control information to the second device based on the RIS capability, the method further includes: obtaining, by the first device, the RIS parameter based on the information about the target.

Manner 2: The second device obtains the RIS parameter. In this manner, the control information includes information about the target, the information about the target includes an identifier, an orientation, or a location of the target, and the second device may obtain the RIS parameter based on the information about the target.

Manner 3: The second device obtains the RIS parameter. In this manner, when the RIS capability is the RIS reflection capability and the RIS refraction capability, the control information further includes an identifier of the RIS capability, and the identifier of the RIS capability is used for indicating that the second device uses the RIS reflection capability and/or the RIS refraction capability. In this way, the second device may determine, based on the identifier of the RIS capability, whether to obtain the RIS reflection parameter and/or the RIS refraction parameter. Further, the second device may obtain the RIS parameter based on the information about the target and the identifier of the RIS capability.

The specific process in which the first device performs collaborative sensing with the second device based on the RIS capability of the second device is described below.

First, there is a case that the RIS capability includes the RIS reflection capability. That is, the RIS capability is the RIS reflection capability, or the RIS capability is the RIS reflection capability and the RIS refraction capability. In this manner, the first device sends the sensing signal to the second device, and the second device reflects the sensing signal to the target based on the beam of the RIS. After encountering the target, the sensing signal may be reflected by the target to form an echo signal. Further, the first device may receive the echo signal from the target, and the first device may obtain a sensing result of the target based on the echo signal. In this way, the first device can sense the target.

Second, according to the foregoing first aspect, when the RIS capability is the RIS reflection capability and the RIS refraction capability, the first device may obtain the sensing result of the target based on the echo signal, where the result may be referred to as a first sensing result. Because the RIS further has the RIS refraction capability, the second device can receive the echo signal from the target based on the RIS refraction capability. The second device may obtain a second sensing result of the target based on the echo signal, and send the second sensing result to the first device. In this manner, the first device may obtain the sensing result of the target based on the first sensing result and the second sensing result.

In this manner, the first device may fuse the sensing result of the target from the second device and the sensing result of the target from the first device, to obtain the sensing result of the target, so that the sensing accuracy is high.

In a possible implementation, when the RIS capability is the RIS reflection capability and the RIS refraction capability, the first device may use the RIS reflection capability or the RIS refraction capability, and the first device may add the identifier of the RIS capability used by the second device to the control information, so that the use of the RIS capability is more flexible.

Third, when the RIS capability is the RIS refraction capability, the second device may generate a sensing signal, and then the second device sends the sensing signal to the target based on the beam of the RIS. The second device may receive an echo signal from the target based on the RIS refraction capability. The second device obtains a sensing result of the target based on the echo signal, and sends the sensing result to the first device. In this way, the first device can obtain the sensing result of the target by means of the second device.

In this manner, when the RIS capability is the RIS refraction capability, the control information sent by the first device to the second device may include a sensing requirement, and the sensing requirement includes a sensing purpose, a sensing performance requirement, and a sensing parameter. The second device may generate a sensing signal based on the sensing requirement. According to a second aspect, an embodiment of this application provides a collaborative sensing method, applicable to a first device, where a second device includes a reconfigurable intelligent surface RIS, and the method includes: sensing a target in collaboration with the second device based on a RIS capability of the second device, where the RIS capability is a RIS reflection capability and/or a RIS refraction capability, the RIS reflection capability is used for representing that the second device supports reflection of a sensing signal from the first device to the target, and the RIS refraction capability is used for representing that the second device supports generation of the sensing signal and sending of the sensing signal to the target.

Before the sensing a target in collaboration with the second device, the method further includes: sending control information to the second device based on the RIS capability, where the control information is used by the second device to perform beamforming on the RIS, and a beam of the RIS after the beamforming points at the target.

In a possible implementation, the control information includes a RIS parameter, the RIS parameter is related to the RIS capability, and before the sending control information to the second device based on the RIS capability, the method further includes: obtaining the RIS parameter based on information about the target, where the information about the target includes an identifier, an orientation, or a location of the target.

In a possible implementation, the control information includes information about the target, and the information about the target includes an identifier, an orientation, or a location of the target.

In a possible implementation, when the RIS capability is the RIS reflection capability and the RIS refraction capability, the control information further includes an identifier of the RIS capability, and the identifier of the RIS capability is used for indicating that the second device uses the RIS reflection capability and/or the RIS refraction capability.

In a possible implementation, when the RIS capability is the RIS refraction capability, the control information further includes a sensing requirement, and the sensing requirement includes a sensing purpose, a sensing performance requirement, and a sensing parameter.

In a possible implementation, the RIS capability includes the RIS reflection capability, and the sensing a target in collaboration with the second device includes: sending the sensing signal to the second device; receiving an echo signal from the target; and obtaining a sensing result of the target based on the echo signal.

In a possible implementation, the RIS capability further includes the RIS refraction capability, and the method further includes: receiving a second sensing result from the second device; and the obtaining a sensing result of the target based on the echo signal includes: obtaining a first sensing result of the target based on the echo signal; and obtaining the sensing result based on the first sensing result and the second sensing result.

In a possible implementation, the RIS capability is the RIS refraction capability, and the sensing a target in collaboration with the second device includes: receiving the sensing result from the second device.

In a possible implementation, the method further includes: receiving the RIS capability reported by the second device.

According to a third aspect, an embodiment of this application provides a collaborative sensing method, applicable to a second device, where the second device includes a reconfigurable intelligent surface RIS, and the method includes: sensing a target in collaboration with a first device based on a RIS capability, where the RIS capability is a RIS reflection capability and/or a RIS refraction capability, the RIS reflection capability is used for representing that the second device supports reflection of a sensing signal from the first device to the target, and the RIS refraction capability is used for representing that the second device supports generation of the sensing signal and sending of the sensing signal to the target.

Before the sensing a target in collaboration with a first device, the method further includes: receiving control information from the first device; and performing beamforming on the RIS based on the control information, where a beam of the RIS after the beamforming points at the target.

In a possible implementation, the performing beamforming on the RIS based on the control information includes: obtaining a RIS parameter based on the control information, where the RIS parameter is related to the RIS capability; and performing beamforming on the RIS based on the RIS parameter.

In a possible implementation, the control information includes the RIS parameter, the RIS parameter is obtained by the first device based on information about the target, and the information about the target includes an identifier, an orientation, or a location of the target.

In a possible implementation, the control information includes information about the target, the information about the target includes an identifier, an orientation, or a location of the target, and the obtaining a RIS parameter based on the control information includes: obtaining the RIS parameter based on the information about the target.

In a possible implementation, when the RIS capability is the RIS reflection capability and the RIS refraction capability, the control information further includes an identifier of the RIS capability, and the identifier of the RIS capability is used for indicating that the second device uses the RIS reflection capability and/or the RIS refraction capability; and the obtaining a RIS parameter based on the control information includes: obtaining the RIS parameter based on the information about the target and the identifier of the RIS capability.

In a possible implementation, the RIS capability includes the RIS reflection capability, and the sensing a target in collaboration with a first device includes: receiving the sensing signal from the first device; and reflecting the sensing signal to the target based on the beam of the RIS.

In a possible implementation, the RIS capability further includes the RIS refraction capability, and after the reflecting the sensing signal to the target, the method further includes: receiving an echo signal from the target; and obtaining a second sensing result of the target based on the echo signal; and sending the second sensing result to the first device.

In a possible implementation, the RIS capability is the RIS refraction capability, and the sensing a target in collaboration with a first device includes: generating a sensing signal; sending the sensing signal to the target based on the beam of the RIS; receiving an echo signal from the target; and obtaining a sensing result of the target based on the echo signal; and sending the sensing result to the first device.

In a possible implementation, the RIS capability is the RIS refraction capability, the control information includes a sensing requirement, and the sensing requirement includes a sensing purpose, a sensing performance requirement, and a sensing parameter; and the generating a sensing signal includes: generating the sensing signal based on the sensing requirement.

In a possible implementation, the method further includes: reporting the RIS capability to the first device.

According to a fourth aspect, an embodiment of this application provides a collaborative sensing apparatus, where the collaborative sensing apparatus may be a first device or a chip in the first device. The collaborative sensing apparatus may include:
a processing module, configured to sense a target in collaboration with the second device based on a RIS capability of the second device, where the RIS capability is a RIS reflection capability and/or
a RIS refraction capability, the RIS reflection capability is used for representing that the second device supports reflection of a sensing signal from the first device to the target, and the RIS refraction capability is used for representing that the second device supports generation of the sensing signal and sending of the sensing signal to the target.

A transceiver module is configured to send control information to the second device based on the RIS capability, where the control information is used by the second device to perform beamforming on the RIS, and a beam of the RIS after the beamforming points at the target.

In a possible implementation, the control information includes a RIS parameter, where the RIS parameter is related to the RIS capability. The processing module is further configured to obtain the RIS parameter based on information about the target, where the information about the target includes an identifier, an orientation, or a location of the target.

In a possible implementation, the control information includes information about the target, and the information about the target includes an identifier, an orientation, or a location of the target.

In a possible implementation, when the RIS capability is the RIS refraction capability, the control information further includes a sensing requirement, and the sensing requirement includes a sensing purpose, a sensing performance requirement, and a sensing parameter.

In a possible implementation, when the RIS capability is the RIS reflection capability and the RIS refraction capability, the control information further includes an identifier of the RIS capability, and the identifier of the RIS capability is used for indicating that the second device uses the RIS reflection capability and/or the RIS refraction capability.

In a possible implementation, the RIS capability includes the RIS reflection capability. The transceiver module is further configured to send the sensing signal to the second device and receive an echo signal from the target; and the processing module is further configured to obtain a sensing result of the target based on the echo signal.

In a possible implementation, the RIS capability further includes the RIS refraction capability. The transceiver module is further configured to receive a second sensing result from the second device. The processing module is further configured to obtain a first sensing result of the target based on the echo signal; and obtain the sensing result based on the first sensing result and the second sensing result.

In a possible implementation, the RIS capability is the RIS refraction capability. The transceiver module is further configured to receive the sensing result from the second device.

In a possible implementation, the transceiver module is further configured to receive the RIS capability reported by the second device.

The collaborative sensing apparatus provided in this embodiment of this application can perform the operations of the first device in the foregoing method embodiments, and implementation principles and technical effects thereof are similar, which are not described herein again.

According to a fifth aspect, an embodiment of this application provides a collaborative sensing apparatus, where the collaborative sensing apparatus may be a second device or a chip in the second device. The collaborative sensing apparatus may include:
a processing module, configured to sense a target in collaboration with a first device based on a RIS capability of a second device, where the RIS capability is a RIS reflection capability and/or a RIS refraction capability, the RIS reflection capability is used for representing that the second device supports reflection of a sensing signal from the first device to the target, and the RIS refraction capability is used for representing that the second device supports generation of the sensing signal and sending of the sensing signal to the target.

The transceiver module is configured to receive control information from the first device; and the processing module is further configured to perform beamforming on the RIS based on the control information, where a beam of the RIS after the beamforming points at the target.

In a possible implementation, the processing module is further configured to obtain a RIS parameter based on the control information, where the RIS parameter is related to the RIS capability; and perform beamforming on the RIS based on the RIS parameter.

In a possible implementation, the control information includes the RIS parameter, the RIS parameter is obtained by the first device based on information about the target, and the information about the target includes an identifier, an orientation, or a location of the target.

In a possible implementation, the control information includes information about the target. The processing module is further configured to obtain the RIS parameter based on information about the target, where the information about the target includes an identifier, an orientation, or a location of the target.

In a possible implementation, when the RIS capability is the RIS reflection capability and the RIS refraction capability, the control information further includes an identifier of the RIS capability, and the identifier of the RIS capability is used for indicating that the second device uses the RIS reflection capability and/or the RIS refraction capability. The processing module is further configured to obtain the RIS parameter based on the information about the target and the identifier of the RIS capability.

In a possible implementation, the RIS capability includes the RIS reflection capability. The transceiver module is configured to receive the sensing signal from the first device; and the RIS is configured to reflect the sensing signal to the target based on the beam of the RIS.

In a possible implementation, the RIS capability further includes the RIS refraction capability, and the RIS is configured to receive an echo signal from the target; and the processing module is further configured to obtain a second sensing result of the target based on the echo signal. The transceiver module is further configured to send the second sensing result to the first device.

In a possible implementation, the RIS capability is the RIS refraction capability. The processing module is further configured to generate a sensing signal. The RIS is further configured to send the sensing signal to the target based on the beam of the RIS and receive an echo signal from the target. The processing module is further configured to obtain a sensing result of the target based on the echo signal. The transceiver module is further configured to send the sensing result to the first device.

In a possible implementation, the control information includes a sensing requirement, and the sensing requirement includes a sensing purpose, a sensing performance requirement, and a sensing parameter; and the processing module is further configured to generate the sensing signal based on the sensing requirement.

In a possible implementation, the transceiver module is further configured to report the RIS capability of the second device to the first device.

According to a sixth aspect, an embodiment of this application provides a collaborative sensing apparatus, where the collaborative sensing apparatus includes a processor, a memory, and a transceiver. The transceiver is coupled to the processor, and the processor controls transceiving operations of the transceiver. The memory is configured to store computer-executable program code, where the program code includes instructions. When the processor executes the instructions, the instructions cause the collaborative sensing apparatus to perform the collaborative sensing method provided in the second aspect or each possible design of the second aspect.

According to a seventh aspect, an embodiment of this application provides a collaborative sensing apparatus, where the collaborative sensing apparatus includes a processor, a memory, a transceiver, and a RIS. The transceiver is coupled to the processor, and the processor controls transceiving operations of the transceiver. The memory is configured to store computer-executable program code, where the program code includes instructions. When the processor executes the instructions, the instructions cause the collaborative sensing apparatus to perform the collaborative sensing method provided in the third aspect or each possible design of the third aspect.

According to an eighth aspect, an embodiment of this application provides a collaborative sensing system, including the collaborative sensing apparatus described in the fourth aspect or the sixth aspect, and the collaborative sensing apparatus described in the fifth aspect or the seventh aspect.

According to a ninth aspect, an embodiment of this application provides a collaborative sensing apparatus, including units, modules, or circuits configured to perform the methods provided in the second aspect and the third aspect. The collaborative sensing apparatus may be a first device or a second device, or may be a module applied to the first device or the second device, for example, may be a chip applied to the first device or the second device.

According to a tenth aspect, an embodiment of this application provides a collaborative sensing apparatus (for example, a chip), where the collaborative sensing apparatus stores a computer program, and the computer program, when executed by the collaborative sensing apparatus, implements the methods provided in the first aspect and the third aspect.

According to an eleventh aspect, an embodiment of this application provides a computer program product including instructions, the instructions, when run on a computer, causing the computer to perform the methods according to the second aspect and the third aspect.

According to a twelfth aspect, an embodiment of this application provides a computer-readable storage medium. The computer-readable storage medium stores instructions. When run on a computer, the instructions cause the computer to perform the methods according to the second aspect and the third aspect.

For beneficial effects of the possible implementations of the second aspect to the twelfth aspect, reference may be made to the beneficial effects brought by the first aspect and the possible implementations of the first aspect, and details are not described herein again.

Embodiments of this application provide a collaborative sensing method, an electronic device, and a readable storage medium, where a second device includes a reconfigurable intelligent surface RIS, and the method includes: sensing, by a first device, a target in collaboration with the second device based on a RIS capability of the second device, where the RIS capability is a RIS reflection capability and/or a RIS refraction capability, the RIS reflection capability is used for representing that the second device supports reflection of a sensing signal from the first device to the target, and the RIS refraction capability is used for representing that the second device supports generation of the sensing signal and sending of the sensing signal to the target. In this application, based on the RIS capability, the second device may reflect the sensing signal from the first device to the target without processing the sensing signal, so that the sensing delay is short; or the second device may generate the sensing signal and directly send the sensing signal to the target without the need to act as an intermediate apparatus for forwarding the sensing signal between the first device and the target, so that the sensing delay is short. The efficiency of collaborative sensing can be improved in both cases.

### BRIEF DESCRIPTION OF DRAWINGS

FIG. 1 is a schematic diagram of a system architecture to which an embodiment of this application is applicable;
FIG. 2 is a schematic diagram of another system architecture to which an embodiment of this application is applicable;
FIG. 3A is a schematic structural diagram of an existing electronic device;
FIG. 3B is a schematic structural diagram of a second device according to an embodiment of this application;
FIG. 4A is a schematic diagram of a RIS according to an embodiment of this application;
FIG. 4B is another schematic diagram of a RIS according to an embodiment of this application;
FIG. 4C is another schematic diagram of a RIS according to an embodiment of this application;
FIG. 5 is a schematic diagram of an embodiment of a collaborative sensing method according to an embodiment of this application;
FIG. 6 is a schematic flowchart of another embodiment of a collaborative sensing method according to an embodiment of this application;
FIG. 7A is a schematic diagram of a comparison between processes of the embodiment shown in FIG. 6 and the related art;
FIG. 7B is a schematic diagram of signal transmission corresponding to FIG. 6;
FIG. 8 is a schematic flowchart of another embodiment of a collaborative sensing method according to an embodiment of this application;
FIG. 9 is a schematic diagram of a comparison between processes of the embodiment shown in FIG. 8 and the related art;
FIG. 10 is a schematic diagram of signal transmission corresponding to FIG. 8;
FIG. 11 is a schematic flowchart of another embodiment of a collaborative sensing method according to an embodiment of this application;
FIG. 12 is a schematic diagram of signal transmission corresponding to FIG. 11;
FIG. 13 is a schematic structural diagram of a collaborative sensing apparatus according to an embodiment of this application;
FIG. 14 is another schematic structural diagram of a collaborative sensing apparatus according to an embodiment of this application; and
FIG. 15 is a schematic structural diagram of an electronic device according to an embodiment of this application.

### DESCRIPTION OF EMBODIMENTS

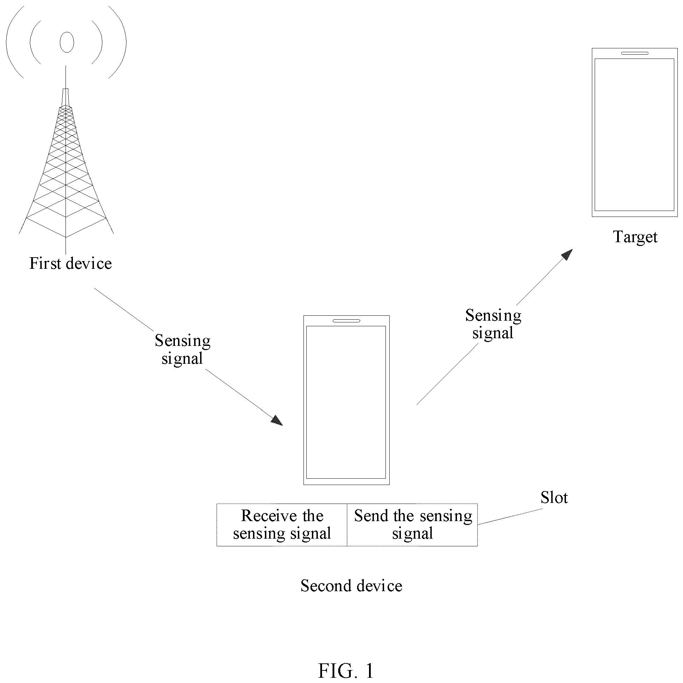

FIG. 1 is a schematic diagram of a system architecture to which an embodiment of this application is applicable. As shown in FIG. 1, the system architecture may include a first device, a second device, and a target. In FIG. 1, an example in which the first device is a base station and both the second device and the target are mobile phones is used for description. The first device and the second device are devices that integrate communication and sensing. That is, the first device and the second device can communicate with and sense another device. In an embodiment, the first device is used as an example. The first device may use, but not limited to, a radar, an ultrasonic sensor, a camera, a thermal imaging sensor, or the like to sense another device. The manner in which the first device and the second device sense the target is not limited in the embodiments of this application.

The first device has a variety of sensing requirements. If the first device needs to sense the target but the distance between the first device and the target is relatively large or there is an obstacle between the first device and the target, the first device fails to sense the target. Alternatively, the first device needs to sense the target in all directions, but due to the presence of an obstacle, the first device can only sense part of the target. Alternatively, the sensing precision of the first device is poor, but the first device needs a sensing result with high sensing precision. To resolve the problem of the sensing requirements of the first device, the first device may sense the target in collaboration with the second device. For example, if the sensing precision of the first device is poor, but the first device needs a sensing result with high sensing precision, the first device may sense the target through the second device with high sensing precision, to obtain a sensing result with high sensing precision.

Referring to FIG. 1, when the first device and the second device perform collaborative sensing, the first device may send a sensing signal to the second device, and the second device may process the sensing signal and forward the sensing signal to the target in a next slot. In an embodiment, after receiving the sensing signal, the target may feed back an echo signal to the second device, the second device may send the echo signal to the first device, and the first device may obtain a sensing result of the target based on the echo signal. In an embodiment, after receiving the sensing signal, the target may feed back an echo signal to the first device, and the first device may obtain a sensing result of the target based on the echo signal. That the second device processes the sensing signal may be that: the second device parses the sensing signal to determine the target. In the existing collaborative sensing solution, it takes a long time for the second device to respond to the sensing signal of the first device, and the second device can only forward the sensing signal to the target in the next slot, resulting in a long delay in obtaining the sensing result by the first device and low efficiency of collaborative sensing.

An embodiment of this application provides a collaborative sensing method. A second device that senses a target in collaboration with a first device is integrated with a reconfigurable intelligent surface (reconfigurable intelligent surface, RIS). The second device may directly reflect a sensing signal from the first device to the target based on a RIS reflection capability, or the second device may generate a sensing signal and send the sensing signal to the target based on a RIS refraction capability. In both cases, the delay in sensing the target by the first device can be reduced, and the efficiency of collaborative sensing can be improved.

It should be understood that the collaborative sensing method in this embodiment of this application is applicable to, but is not limited to, various communication systems such as a Global System for Mobile Communications (Global System for Mobile Communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, an advanced long term evolution (advanced long term evolution, LTE-A) system, a new radio (new radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunication system (universal mobile telecommunication system, UMTS), a worldwide interoperability for microwave access (worldwide interoperability for microwave access, WiMAX) system, a wireless local area network (wireless local area network, WLAN), a wireless fidelity (wireless fidelity, Wi-Fi) system, and a next generation communication system. The NR system may also be referred to as the 5th generation mobile network (5th generation mobile network, 5G) communication system.

The first device may be, but is not limited to, a terminal device and a network device, and the second device may be, but is not limited to, a terminal device and a network device. The second device is a device integrated with a RIS.

The network device may be a base transceiver station (base transceiver station, BTS) in a GSM system or a CDMA system, a NodeB (NodeB, NB) in a WCDMA system, an evolutional NodeB (evolutional NodeB, eNB or eNodeB) in an LTE system, or a wireless controller in a cloud radio access network (cloud radio access network, CRAN). Alternatively, the network device may be a network side device in a mobile switching center, a relay station, an access point, a hub, a switch, a bridge, a router, or a 5G network, or may be a network device or the like in a future evolved public land mobile network (public land mobile network, PLMN). When the communication system is an NR system, the network device may be a (radio) access network (radio access network, (R)AN) device in the NR system, and the (R)AN device in the NR system may be an access point (access point, AP) of a non-3GPP access network such as a Wi-Fi network, a next-generation base station (which may be collectively referred to as a new-generation radio access network node (NG-RAN node), where the next-generation base station includes an NR NodeB (NR NodeB, gNB), an NG-eNB (NG-eNB), a gNB in an isolated form of a central unit (central unit, CU) and a distributed unit (distributed unit, DU), and the like), a new radio controller (new radio controller, NR controller), a radio frequency remote module, a micro base station, a relay (relay), a transmission receive point (transmission receive point, TRP), or a transmission point (transmission point, TP), or other nodes.

The terminal device may be a mobile device or a fixed device. The terminal device may be, but is not limited to: a mobile phone, a tablet computer, a notebook computer, a speaker, a headphone, a wearable device, a smart screen, a smart home appliance, an Internet of Things (Internet of Things, IoT) device, an in-vehicle device, and other devices with antennas. Optionally, the terminal device may be alternatively a personal digital assistant (personal digital assistant, PDA), a handheld device with wireless communication capabilities, a computing device, a virtual reality (virtual reality, VR) terminal device, a drone device, an augmented reality (augmented reality, AR) terminal device, a wireless terminal in industrial control (industrial control), a wireless terminal in smart home (smart home), and the like. The forms of the network device and the terminal device are not limited in the embodiments of this application.

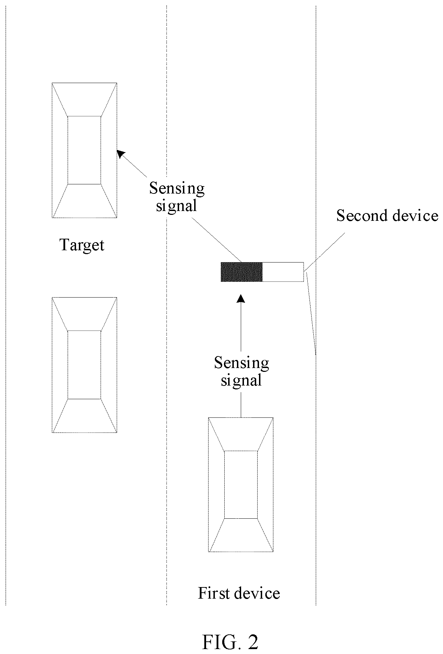

FIG. 2 is a schematic diagram of another system architecture to which an embodiment of this application is applicable. As shown in FIG. 2, a first device in the system architecture may be an in-vehicle device, a second device may be a roadside device, and a target may be another in-vehicle device. When sensing the another in-vehicle device, due to obstruction of an obstacle (for example, a vehicle), the in-vehicle device may use the roadside device to collaboratively sense the another in-vehicle device. The roadside device may be, but is not limited to, a monitoring device disposed on both sides of the road. It should be understood that the system architecture and scenarios to which the collaborative sensing method is applicable are not limited in the embodiments of this application. In FIG. 2, the in-vehicle device is represented by a vehicle.

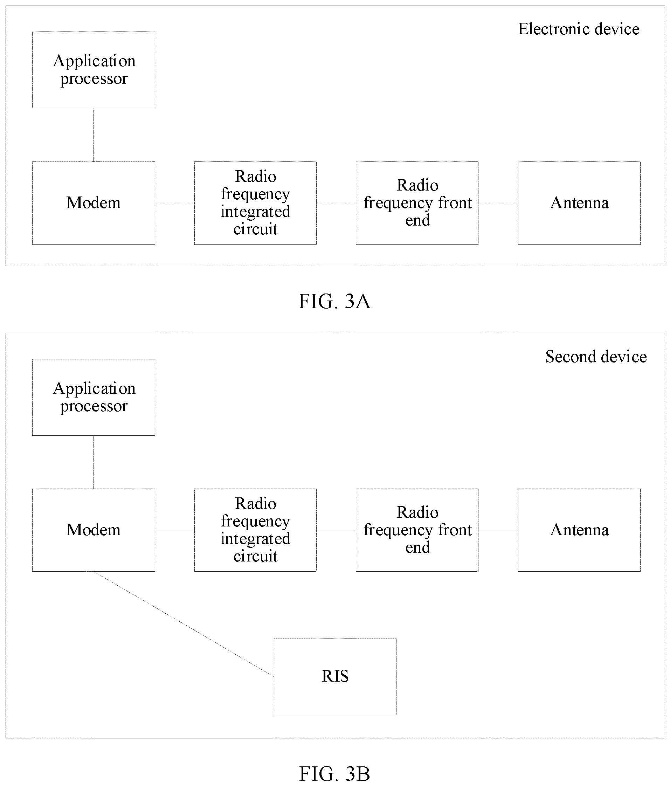

Before the collaborative sensing method provided in this embodiment of this application is described, the structure of the second device integrated with a RIS and a RIS capability are described first. FIG. 3A is a schematic structural diagram of an existing electronic device. Referring to FIG. 3A, in an embodiment, the electronic device may include: an application processor, a modem, a radio frequency integrated circuit, a radio frequency front end, and an antenna. In a scenario where the electronic device sends a signal, the application processor is configured to send service data to the modem. For example, in a scenario where the electronic device performs a video call with another device, the service data may be video data. The modem is configured to perform baseband processing on the service data (for example, the video data), and output a baseband signal after coding and modulation. The radio frequency integrated circuit is configured to modulate a low-frequency baseband signal to a high frequency band to obtain a high-frequency radio frequency signal. The power of the radio frequency signal modulated by the radio frequency integrated circuit is low, and the radio frequency front end is configured to amplify the power of the radio frequency signal. The antenna is configured to transmit the radio frequency signal from the radio frequency front end. That is, the electronic device transmits the signal. Similarly, the antenna may receive a radio frequency signal from another device, and in the reverse order, the radio frequency signal is processed by the radio frequency front end, the radio frequency integrated circuit, and the modem sequentially to obtain a digital signal. The digital signal is then sent to the application processor for processing. It should be understood that for other descriptions of the application processor, the modem, the radio frequency integrated circuit, the radio frequency front end, and the antenna, reference may be made to the related descriptions in the related art.

FIG. 3B is a schematic structural diagram of a second device according to an embodiment of this application. Compared with FIG. 3A, the second device shown in FIG. 3B may further include a RIS. The RIS is an array antenna based on an artificial electromagnetic surface. The RIS includes a plurality of array units. Characteristics and spatial arrangement of RIS units are designed, to control parameters such as an amplitude, a phase, polarization, beam, and orbital angular momentum of an electromagnetic wave, which can implement functions such as deflection, focusing, and wave absorption of electromagnetic energy.

Different second devices may have different RIS capabilities. The RIS capability may include, but is not limited to, a RIS reflection capability and a RIS refraction capability The RIS refraction capability may be referred to as a RIS transmission capability. In an embodiment, the modem may send control information to the RIS, where the control information may include parameters such as phases and amplitudes of antenna units in the RIS. The second device may adjust the parameters such as the phases and amplitudes of the antenna units in the RIS based on the control information, thereby reflecting or refracting the sensing signal.

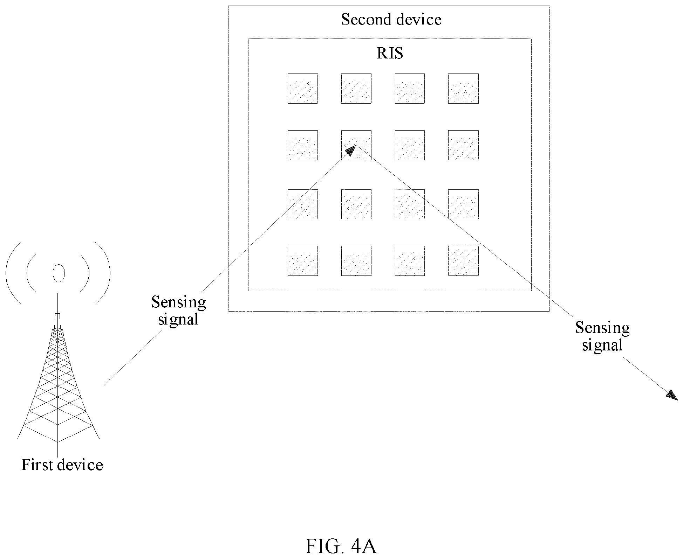

In an embodiment, the second device has the RIS reflection capability, the RIS does not participate in the transmission and reception of radio signals of the second device, and the RIS is configured to reflect the sensing signal. FIG. 4A is a schematic diagram of a RIS according to an embodiment of this application. The shaded squares in FIG. 4A represent antenna units in the RIS, and the RIS can reflect the sensing signal from the first device based on the RIS reflection capability.

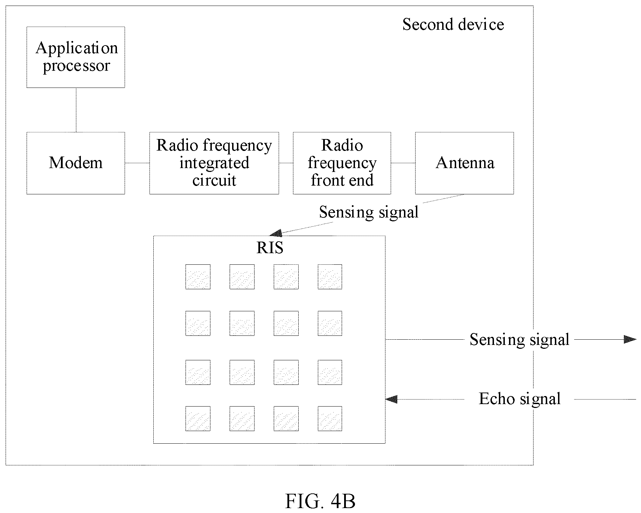

In an embodiment, the second device has the RIS refraction capability, and the RIS may assist the second device in transmitting and receiving the sensing signal. FIG. 4B is another schematic diagram of a RIS according to an embodiment of this application. Referring to FIG. 4B, the second device may generate a sensing signal, and transmit the sensing signal to the RIS through an antenna. The RIS may refract the sensing signal based on the RIS refraction capability. The RIS may further receive an echo signal in response to the sensing signal based on the RIS refraction capability. In other words, the RIS refraction capability is used for representing that the second device supports generation of the sensing signal and sending of the sensing signal.

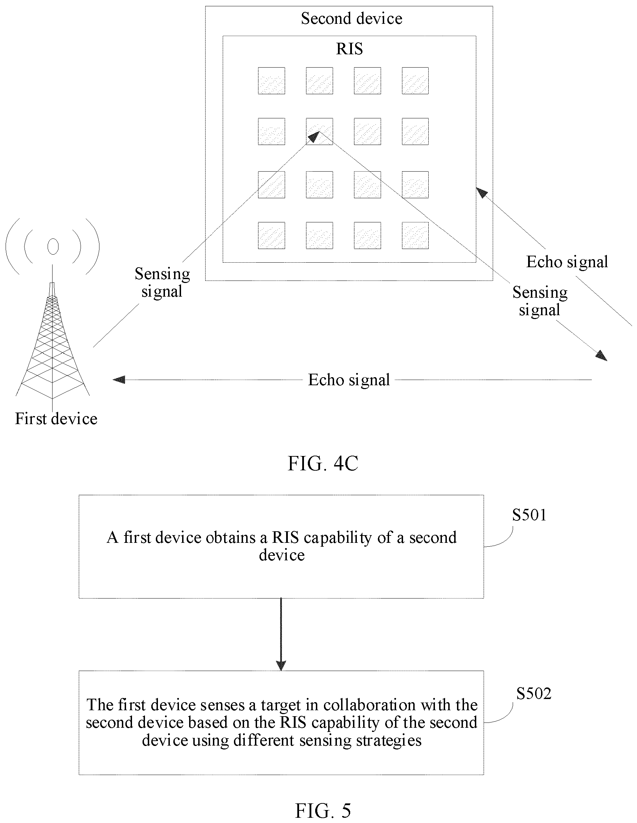

In an embodiment, the second device has the RIS reflection capability and the RIS refraction capability. FIG. 4C is another schematic diagram of a RIS according to an embodiment of this application. Referring to FIG. 4C, the RIS can reflect the sensing signal from the first device and receive the echo signal in response to the sensing signal. Reference may be made to the related descriptions in FIG. 4A and FIG. 4B.

In an embodiment, the first device may obtain the RIS capability of the second device, and then the first device may sense the target in collaboration with the second device based on the RIS capability of the second device using different sensing strategies.

In an embodiment, the second device may report the RIS capability of the second device to the first device. For example, the second device may report the RIS capability to the first device in a manner of a layer 3 (Layer 3, L3) message, a layer 2 (Layer 2, L2) message, a layer 1 (Layer 1, L1) message, data carrying, or the like. It should be understood that the layer 1 is a physical layer, the layer 2 is a medium access control layer, and the layer 3 is an access layer. It should be understood that the physical layer, the medium access control layer, and the access layer in this embodiment of this application may also be called other names, or divided into more and fewer layers, which are not limited.

For example, the first device is a base station, and the second device is a mobile phone. When accessing the base station, the second device may add the RIS capability to Radio Resource Control (Radio Resource Control, RRC) signaling (layer 3 signaling), to report the RIS capability to the first device. Alternatively, when accessing the base station, the second device may add the RIS capability to Media Access Control-control element (Media Access Control-control element, MAC CE) signaling (layer 2 signaling), to report the RIS capability to the first device. Alternatively, the second device may add the RIS capability to signaling (layer 1 signaling) or data transmitted on an uplink channel, to report the RIS capability to the first device. The uplink channel may include, but is not limited to, a physical uplink shared channel (physical uplink shared channel, PUSCH) and a physical control channel (physical uplink control channel, PUCCH).

In an embodiment, the first device may query the second device for the RIS capability. For example, in an example where the second device is user equipment (user equipment, UE), after the first device and the second device are connected, the first device may send RIS capability enquiry information (UE capability enquiry) to the second device, and in response to the RIS capability enquiry information, the second device feeds back the RIS capability of the second device to the first device through a UE capability information message (UE capability information).

In an embodiment, the RIS capability of the second device may include: RIS-supported operating modes. The RIS-supported operating modes may be: RIS non-supported, RIS reflection supported and/or RIS refraction supported. RIS reflection may be understood as the RIS reflection capability, and RIS refraction may be understood as the RIS refraction capability. In an embodiment, the second device may use bits to represent the RIS-supported operating modes, as shown in Table 1 below:

**Table 1**

| Bit | Definitions of RIS-supported operating modes |
|---|---|
| 00 | RIS reflection and RIS refraction non-supported |
| 01 | RIS reflection |
| 10 | RIS refraction |
| 11 | RIS reflection and RIS refraction supported |

It should be understood that, in this embodiment of this application, the second device may use other identifiers. For example, reflection is used to represent RIS reflection, and refraction is used to represent RIS refraction. Alternatively, R1 is used to represent RIS reflection, and R2 is used to represent RIS refraction. The manner of representing the RIS-supported operating modes is not limited in the embodiments of this application.

In an embodiment, the RIS capability may further include: a RIS maximum gain, a RIS scanning range, a RIS operating bandwidth, and a RIS size. Because the RIS may be regarded as an antenna, the RIS maximum gain may be understood as: a measure of a capability of sending and receiving signals in a specific direction by the RIS. For example, the RIS maximum gain may be 17 dBi. The RIS scanning range may be understood as a range that a RIS beam can cover, for example, ±50°. The RIS operating bandwidth may be understood as a frequency range in which the RIS operates. The RIS size may be understood as the size of the RIS. Reference may be made to a related description of the size of the antenna.

After obtaining the RIS capability of the second device, the first device may store the RIS capability of the second device. When the first device needs to sense the target in collaboration with the second device, the first device may sense the target in collaboration with the second device based on the RIS capability of the second device using different sensing strategies. In an embodiment, RIS capabilities of a plurality of second devices may be stored in the first device, and when the first device needs to sense the target in collaboration with the second device, the first device may select a target second device from the plurality of second devices. The first device may sense the target in collaboration with the target second device.

For example, the first device may select a second device with the best channel quality, with the largest RIS gain, or with the largest RIS scanning range as the target second device. Alternatively, the first device may select a second device as the target second device, where there is no obstacle between the second device and the target. The manner in which the first device selects the target second device from the plurality of second devices is not limited in this embodiment of this application. In the following embodiment, a second device that performs collaborative sensing with the first device is the target second device.

FIG. 5 is a schematic diagram of an embodiment of a collaborative sensing method according to an embodiment of this application. Referring to FIG. 5, the collaborative sensing method may include the following steps.

S501: A first device obtains a RIS capability of a second device.

For S501, reference may be made to the foregoing related description.

S502: The first device senses a target in collaboration with the second device based on the RIS capability of the second device using different sensing strategies.

If the second device has a RIS reflection capability, the second device can passively collaborate to sense the target, that is, the second device can passively collaborate with the first device to sense the target. If the second device has a RIS refraction capability, the second device can actively collaborate to sense the target, that is, the second device can actively collaborate with the first device to sense the target. If the second device has the RIS reflection capability and the RIS refraction capability, the second device actively and passively collaborates with the first device to sense the target.

That is, if the second device has the RIS reflection capability, a sensing strategy may be that: the second device passively collaborates to sense the target. If the second device has the RIS refraction capability, a sensing strategy may be that: the second device actively collaborates to sense the target. If the second device has the RIS reflection capability and the RIS refraction capability, a sensing strategy may be that: the second device actively and passively collaborates with the first device to sense the target. For details of the three sensing strategies shown in FIG. 5, reference may be made to related descriptions of the following embodiment.

In this embodiment of this application, the first device may sense the target based on the RIS capability of the second device using different sensing strategies, which can reduce the sensing delay of the first device and improve the efficiency of collaborative sensing.

The collaborative sensing method provided in the embodiments of this application is described below with reference to specific embodiments. The following embodiments may be mutually combined, and same or similar concepts or processes may not be repeatedly described in some embodiments.

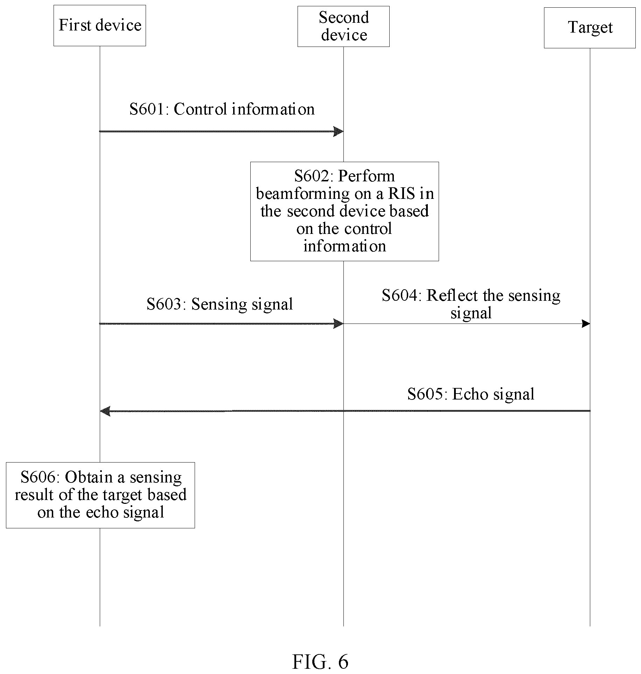

In an embodiment, the second device has the RIS reflection capability and the second device can passively collaborate to sense the target. It may be understood that the second device does not participate in the generation and reception of the sensing signal but instead reflects the sensing signal from the first device to the target. FIG. 6 is a schematic flowchart of another embodiment of a collaborative sensing method according to an embodiment of this application. As shown in FIG. 6, the collaborative sensing method may include the following steps.

S601: A first device sends control information to a second device.

In an embodiment, the control information may include a RIS parameter, and the RIS parameter is used for indicating parameters of antenna units in a RIS. The first device may send the control information to the second device based on a RIS capability of the second device. In this embodiment of this application, the second device has a RIS reflection capability, and the RIS parameter in the control information may be a RIS reflection parameter. The RIS reflection parameter may include, but is not limited to, phases and amplitudes of the antenna units in the RIS. In the control information, the phases and the amplitudes of the antenna units represented by the RIS parameter may be represented in the form of a matrix or in a binary form, which is not limited in this embodiment of this application.

In an embodiment, the first device may generate a RIS parameter of the second device based on information about the target, and then add the RIS parameter to the control information. For example, the first device may use a beamforming algorithm to generate the RIS parameter of the second device. The information about the target may include an identifier, an orientation, or a location of the target. The identifier of the target may be, but is not limited to, an international mobile equipment identity (international mobile equipment identity, IMEI) of the target or a mobile phone number of the target. When the information about the target includes the identifier of the target, the second device may generate a RIS reflection parameter of the second device based on the identifier of the target. For example, the second device may obtain the location or the orientation of the target based on the identifier of the target, and then generate the RIS reflection parameter based on the location or the orientation of the target. The RIS reflection parameter enables the second device to reflect a sensing signal from the first device to the target, which may be alternatively understood as: the second device may adjust a beam of the RIS based on the RIS reflection parameter to point at the target.

In an embodiment, the orientation may be referred to as a location, and the location is used as an example below for description. The first device may generate the RIS reflection parameter of the second device based on the information about the target. In other words, based on the control information from the first device, the second device adjusts parameters of the antenna units to the parameters of the antenna units represented by the RIS reflection parameter, and the RIS after the parameter adjustment can reflect the sensing signal from the first device to the target. It should be noted that the first device has obtained the location of the target. Therefore, a sensing requirement of the first device for the target may be to sense a speed, a size, or the like of the target, but is not the location of the target.

In an embodiment, the control information may include the information about the target. The second device may generate a RIS parameter based on the control information, where the RIS parameter may be a RIS reflection parameter. For details of the generation of the RIS reflection parameter by the second device, reference may be made to the related description of the generation of the RIS parameter by the first device.

S602: The second device performs beamforming on a RIS in the second device based on the control information.

The second device may obtain the RIS reflection parameter of the second device based on the control information. The second device may perform beamforming on the RIS in the second device according to the RIS reflection parameter. That the second device performs beamforming on the RIS in the second device may be understood as: the second device adjusts the phases and the amplitudes of the antenna units in the RIS based on the phases and the amplitudes of the antenna units in the RIS reflection parameter. It should be understood that the beam of the RIS after the beamforming points at the target. For example, when the second device receives the sensing signal from the first device, the sensing signal may be sent to the target through the beam of the RIS. For the beamforming, reference may be further made to the related description of the beamforming of existing antennas.

S603: The first device sends a sensing signal to the second device.

In an embodiment, the sensing signal may be an electromagnetic wave signal such as a beam or an omnidirectional signal. The beam may be understood as a beam transmitted by an antenna of the first device, or an ultrasonic beam, a radar beam, or the like transmitted by the first device. The omnidirectional signal may be a signal transmitted by an antenna. The sensing signal is used for enabling the target to feed back an echo signal.

In an embodiment, the first device may generate a sensing signal based on a sensing requirement. The sensing requirement may include a sensing purpose, a sensing performance requirement, and a sensing parameter. The sensing purpose may include, but is not limited to, ranging, sensing the size of the target, and sensing the speed of the target. The sensing performance requirement may include, but is not limited to, sensing precision and sensing accuracy. The sensing parameter may include, but is not limited to, a sensing waveform and a sensing resource. For example, the sensing waveform may be a single carrier or a plurality of carriers, and the sensing resource may be understood as: sensing on a specific frame or a specific carrier. Optionally, the sensing resource may be a sensing time-frequency resource.

It should be understood that the sensing signal is adapted to the sensing requirement. For example, a waveform of the sensing signal is a waveform in the sensing requirement, and a sensing resource may be a sensing resource in the sensing requirement.

S604: The second device reflects the sensing signal to a target.

In this embodiment of this application, because the second device has adjusted the phases and the amplitudes of the antenna units based on the RIS reflection parameter, the second device can directly reflect the sensing signal to the target through the RIS after receiving the sensing signal from the first device. It may be alternatively understood that the second device performs beamforming on the RIS in the second device, and the second device may carry the sensing signal based on the beam generated by the RIS, and reflect the sensing signal to the target.

Because the second device does not need to process the sensing signal, but instead directly reflects the sensing signal, the solution in this application may be understood as: the second device may send the sensing signal to the target in the same slot in which the sensing signal is received. Therefore, compared with the technical solution in the related art in which the second device sends the sensing signal to the target in a next slot, the second device can send the sensing signal to the target in the same slot when the sensing signal is received, which can improve the speed of responding to the sensing signal by the second device, thereby reducing the delay in sensing the target by the first device, and improving the efficiency of collaborative sensing. In addition, in the related art, the second device needs to process the sensing signal, so that the power consumption of the second device is high. In the related art, the second device processes the sensing signal and forwards the sensing signal in the next slot, which occupies the opportunity that a radio signal can be sent in the second slot, reducing the communication opportunity of the second device. However, in the embodiments of this application, the second device directly reflects the sensing signal, so that the power consumption is low. In addition, the sensing signal is sent in almost the same slot, which does not affect the communication of the second device. In addition, because the RIS (equivalent to an antenna) can enhance the reflection of the sensing signal to the target, compared with the collaborative sensing solution in the related art, in this embodiment of this application, the second device can enhance the sensing signal received by the target.

S605: The first device receives an echo signal fed back by the target.

The sensing signal reflected by the second device is irradiated on the target, and may be reflected by the target to generate an echo signal. That is, the target can feed back the echo signal in response to the sensing signal reflected by the second device. The first device may receive the echo signal fed back by the target.

In an embodiment, the echo signal may be understood as a signal after the sensing signal is reflected by the target. For example, the sensing signal is an ultrasonic beam or a radar beam, and the echo signal may be an ultrasonic beam or a radar beam reflected by the target. Because the RIS can enhance the reflection of the sensing signal to the target, the echo signal reflected by the target is also enhanced, which can improve the sensing precision and accuracy.

S606: The first device obtains a sensing result of the target based on the echo signal.

In an embodiment, the first device may obtain the sensing result of the target based on an attribute of the sensing signal and an attribute of the echo signal. The echo signal is used as an example. The attribute of the echo signal may be, but is not limited to, a frequency, a phase, and an amplitude of the echo signal, and a moment at which the first device receives the echo signal. It should be understood that when a sensing requirement of the first device is different, a sensing result of the target may be obtained based on a different "attribute of the sensing signal and a different attribute of the echo signal".

For example, if the first device needs to sense the speed of the target, according to the Doppler effect, a change in the frequency of the echo signal is related to "a relative speed between the first device and the target". Therefore, the first device may obtain the relative speed between the target and the first device based on the change in the frequency of the echo signal, and then obtain the speed of the target based on the speed of the first device.

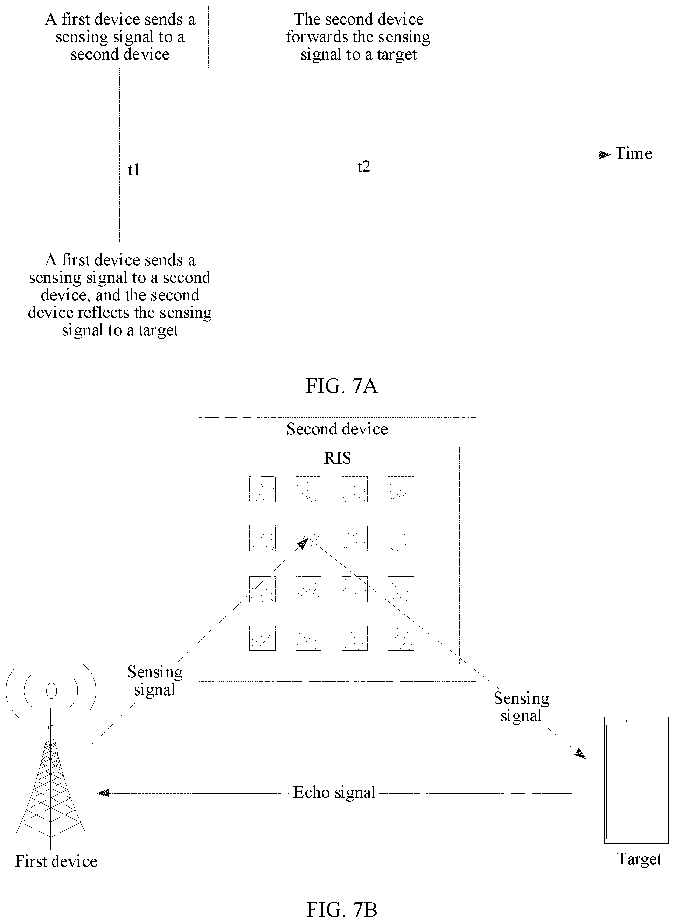

FIG. 7A is a schematic diagram of a comparison between processes of the embodiment shown in FIG. 6 and the related art. Referring to FIG. 7A, in the related art, for example, at a moment t1, a first device sends a sensing signal to a second device. It is assumed that the second device receives the sensing signal at the moment t1 as well. The second device then processes the sensing signal, and forwards the sensing signal to a target at a moment t2. However, in this embodiment of this application, at a moment t1, a first device sends a sensing signal to a second device. It is assumed that the second device receives the sensing signal at the moment t1 as well, the second device may then reflect the sensing signal to a target at the moment t1 based on a RIS reflection capability, thereby reducing the delay in responding to the sensing signal by the second device, and reducing the power consumption of the second device.

FIG. 7B is a schematic diagram of signal transmission corresponding to FIG. 6. Referring to FIG. 7B, a first device is a base station, a second device and a third device are mobile phones, and a RIS may be integrated in the second device. Based on the foregoing steps S601 and S602, the second device may adjust the phases and the amplitudes of the antenna units in the RIS. The first device sends a sensing signal to the second device, the second device may reflect the sensing signal to the target based on the RIS reflection capability, and the target may feed back an echo signal to the first device based on the sensing signal.

In this embodiment of this application, the first device sends control information to the second device, the second device may perform beamforming on the RIS in the second device based on the control information, the first device sends a sensing signal to the second device, the second device may reflect the sensing signal to the target, and the target may feed back an echo signal to the first device based on the sensing signal. Because the second device does not process the sensing signal but instead reflects the sensing signal to the target, the power consumption of the second device is low. In addition, the speed of responding to the sensing signal is accelerated, which reduces the delay in obtaining the sensing result by the first device, and improves the efficiency of collaborative sensing. In addition, the RIS in the second device can enhance the reflection of the sensing signal to the target in real time, thereby enhancing the echo signal of the target and improving the sensing precision and accuracy.

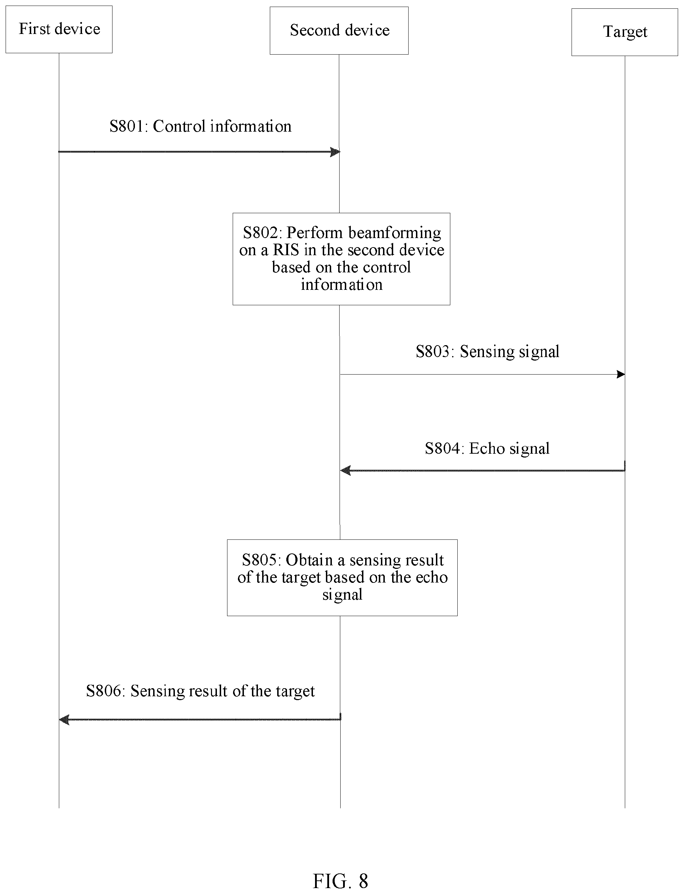

In the foregoing embodiment, if there is an obstacle between the first device and the target, the first device fails to receive the echo signal fed back by the target, and the first device fails to sense the target. According to the collaborative sensing method provided in the embodiments of this application, the second device that performs collaborative sensing actively generates the sensing signal, obtains the sensing result based on the echo signal fed back by the target, and then feeds back the sensing result to the first device. Therefore, when there is an obstacle between the first device and the target, the first device can sense the target, and compared with the collaborative sensing method in the related art, the delay in sensing the target by the first device can be reduced, and the efficiency of collaborative sensing can be improved. In an embodiment, the second device has the RIS refraction capability and the second device can actively collaborate to sense the target. That is, when the second device has the RIS refraction capability, the second device may actively generate a sensing signal, so that the first device can sense the target. For details, reference may be made to a related description of FIG. 8.

FIG. 8 is a schematic flowchart of another embodiment of a collaborative sensing method according to an embodiment of this application. As shown in FIG. 8, the collaborative sensing method may include the following steps.

S801: A first device sends control information to a second device.

The first device may send the control information to the second device based on a RIS capability of the second device. In this embodiment of this application, the second device has a RIS refraction capability. In an embodiment, the control information may include a RIS parameter and a sensing requirement, and the RIS parameter is a RIS refraction parameter. The RIS refraction parameter may include, but is not limited to, phases and amplitudes of antenna units in the RIS. The RIS refraction capability enables the second device to transmit and receive a sensing signal generated by the second device.

In an embodiment, the first device may generate a RIS refraction parameter of the second device based on information about the target, and then add the RIS refraction parameter to the control information. In an embodiment, the control information may further include the information about the target, and the second device may generate a RIS refraction parameter based on the information about the target. For details of the generation of the RIS refraction parameter by the first device or the generation of the RIS refraction parameter by the second device, reference may be made to the related description in S601.

That is, the second device may obtain the RIS refraction parameter based on the control information from the first device. Based on the RIS refraction parameter, the second device may adjust parameters of the antenna units to the parameters of the antenna units represented by the RIS refraction parameter, and the RIS after the parameter adjustment can send the sensing signal generated by the second device to the target, and can also receive an echo signal fed back by the target.

S802: The second device performs beamforming on a RIS in the second device based on the control information.

The second device may perform beamforming on the RIS in the second device based on the RIS refraction parameter. That the second device performs beamforming on the RIS in the second device may be understood as: the second device adjusts phases and amplitudes of the antenna units in the RIS based on the phases and the amplitudes of the antenna units in the RIS refraction parameter. It should be understood that the beam of the RIS after the beamforming points at the target. For example, the second device may receive the echo signal from the target.

S803: The second device sends a sensing signal to the target.

The second device may generate a sensing signal based on a sensing requirement in the control information. For details, reference may be made to the related description of the generation of the sensing signal by the first device.

After the second device performs beamforming on the RIS in the second device, the second device may carry the sensing signal based on the beam generated by the RIS, and send the sensing signal to the target. In an embodiment, referring to FIG. 4B, the second device generates the sensing signal based on the sensing requirement in the control information, and transmits the sensing signal to the RIS through the antenna. The RIS may refract the sensing signal toward the target based on the RIS refraction capability.

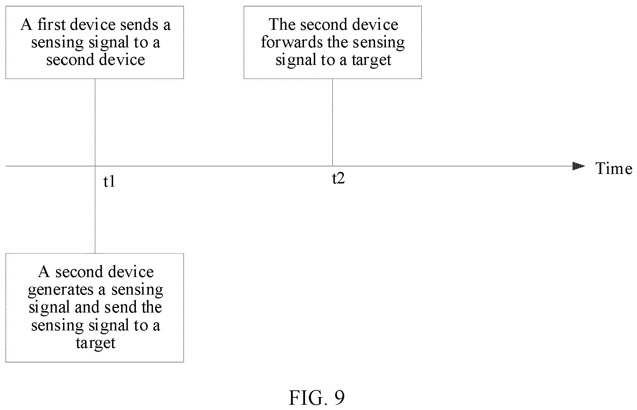

In this embodiment of this application, the second device may generate the sensing signal and send the sensing signal to the target. Compared with the existing collaborative sensing solution, the process of processing the sensing signal by the second device is not required, so that the delay in sensing the target by the first device can be reduced, and the efficiency of collaborative sensing can be improved. FIG. 9 is a schematic diagram of a comparison between processes of the embodiment shown in FIG. 8 and the related art. In the related art, for example, at a moment t1, a first device sends a sensing signal to a second device. It is assumed that the second device receives the sensing signal at the moment t1 as well. The second device then processes the sensing signal, and forwards the sensing signal to a target at a moment t2. However, in this embodiment of this application, the second device may generate, at the moment t1, the sensing signal and send the sensing signal to the target. For the transmission process of the sensing signal, the second device generates the sensing signal (which can offset the time for the first device to generate the sensing signal), the second device may send the sensing signal to the target without requiring the process of the transmission of the sensing signal from the first device to the second device, and the processing of the sensing signal by the second device is not required. Therefore, the delay in sensing the target by the first device can be reduced, and the efficiency of collaborative sensing can be improved.

S804: The second device receives an echo signal fed back by the target.

The sensing signal refracted by the second device is irradiated on the target, and may be reflected by the target to generate an echo signal. Therefore, the second device may receive the echo signal from the target. In an embodiment, referring to FIG. 4B, the RIS in the second device may receive the echo signal from the target.

S805: The second device obtains a sensing result of the target based on the echo signal.

For S805, reference may be made to the related description of the first device in S606, which is not described herein again.

S806: The second device sends the sensing result of the target to the first device.

The second device may send the sensing result of the target to the first device, so that the first device can sense the target.

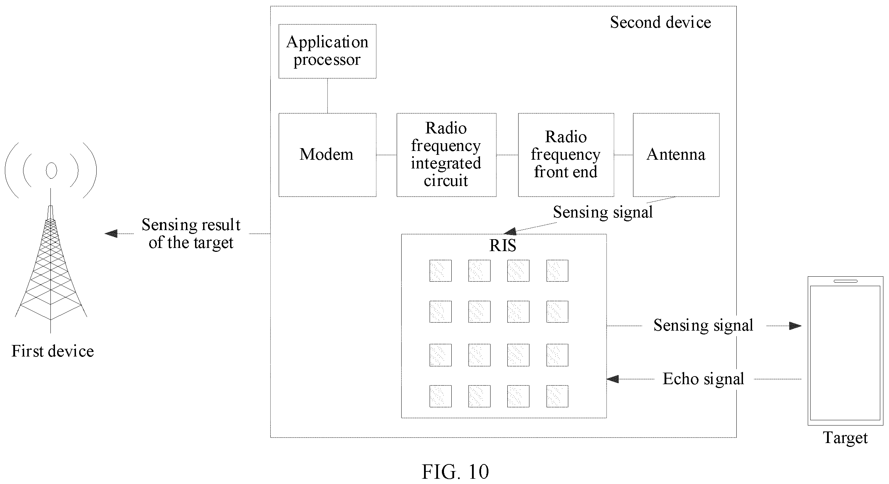

FIG. 10 is a schematic diagram of signal transmission corresponding to FIG. 8. Referring to FIG. 10, a first device is a base station, a second device and a third device are mobile phones, and a RIS is integrated in the second device. Based on the foregoing steps S801 and S802, the second device may adjust the phases and the amplitudes of the antenna units in the RIS. The second device may generate a sensing signal, and refract the sensing signal to the target based on the RIS refraction capability. The target may return an echo signal based on the sensing signal. The second device may receive the echo signal. The second device may receive the echo signal from the target based on the RIS and/or the antenna. In FIG. 10, an example in which the second device may receive the echo signal from the target based on the RIS is used for description. The second device obtains the sensing result of the target based on the echo signal, and may send the sensing result of the target to the first device.

In the embodiments of this application, the second device that performs collaborative sensing actively generates the sensing signal, obtains the sensing result based on the echo signal fed back by the target, and then feeds back the sensing result to the first device. Therefore, the problem that the first device fails to sense the target when there is an obstacle between the first device and the target can be resolved. In addition, the second device generates the sensing signal, and can send the sensing signal to the target without the transmission of the sensing signal or the processing of the sensing signal by the second device. Therefore, the delay in sensing the target by the first device can be reduced, and the efficiency of collaborative sensing can be improved. The embodiments of this application further have other technical effects in the foregoing embodiments.

Reference may be made to the related descriptions of the foregoing embodiments.

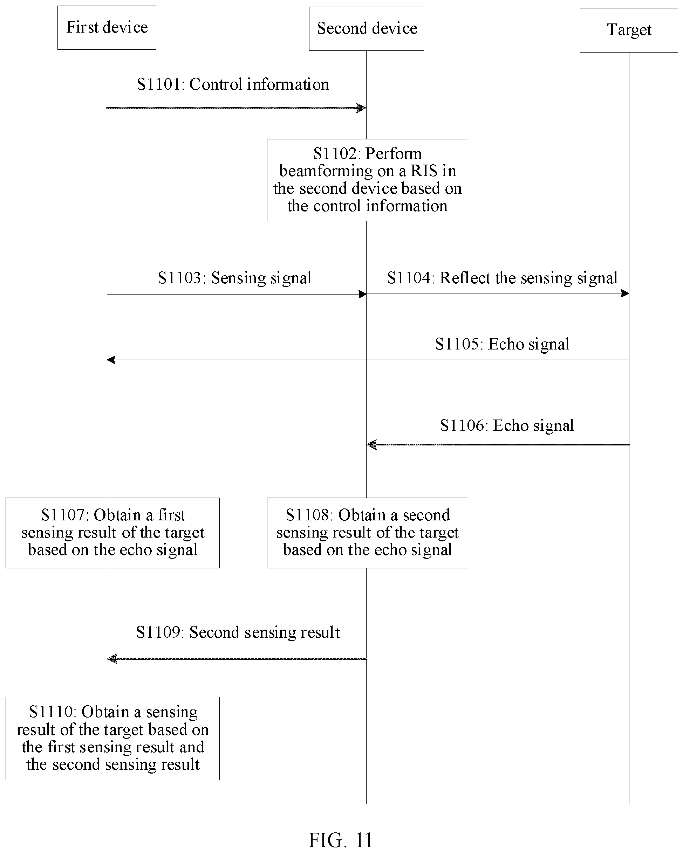

In an embodiment, the second device has both the RIS reflection capability and the RIS refraction capability, and the second device may actively and passively collaborate with the first device to sense the target. FIG. 11 is a schematic flowchart of another embodiment of a collaborative sensing method according to an embodiment of this application. As shown in FIG. 11, the collaborative sensing method may include the following steps.

S1101: A first device sends control information to a second device.

In an embodiment, the control information may include a RIS parameter, and the RIS parameter is used for indicating parameters of antenna units in a RIS. The first device may send the control information to the second device based on a RIS capability of the second device. In this embodiment of this application, the second device has a RIS reflection capability and a RIS refraction capability, and the RIS parameter in the control information may include a RIS reflection parameter and a RIS refraction parameter. For the RIS reflection parameter and the RIS refraction parameter, reference may be made to the related descriptions of the foregoing embodiments.

The first device may generate a RIS parameter of the second device based on information about the target, and then add the RIS parameter to the control information. In an embodiment, the control information may include the information about the target. The second device may generate a RIS reflection parameter and a RIS refraction parameter based on the control information. For the generation of the RIS reflection parameter and the RIS refraction parameter by the first device, and the generation of the RIS reflection parameter and the RIS refraction parameter by the second device, reference may be made to the related descriptions of the foregoing embodiments.

In an embodiment, when the second device has both the RIS reflection capability and the RIS refraction capability, the first device may instruct the second device to use the RIS reflection capability or the RIS refraction capability. In a possible implementation, the control information may include a RIS reflection parameter or a RIS refraction parameter, and the second device may perform beamforming on the RIS in the second device based on the RIS reflection parameter or the RIS refraction parameter. Reference may be made to the related descriptions of the foregoing embodiments. In a possible implementation, the control information may include the information about the target and an identifier of the RIS capability, and the identifier of the RIS capability is used for indicating that the second device uses the RIS reflection capability and/or the RIS refraction capability. In an embodiment, when the first device instructs the second device to use the RIS reflection capability and the RIS refraction capability, the control information may not include the identifier of the RIS capability. In this embodiment, the identifier of the RIS capability is used for indicating that the second device uses the RIS reflection capability or the RIS refraction capability. Correspondingly, the second device may obtain the RIS parameter based on the information about the target and the identifier of the RIS capability. For example, when the identifier is used for indicating the RIS reflection capability, the second device may generate the RIS reflection parameter based on a location of the target. It should be understood that when the first device uses the RIS reflection capability, the second device may passively collaborate to sense the target, and when the first device uses the RIS refraction capability, the second device may actively collaborate to sense the target. Reference may be made to the related descriptions of the foregoing embodiments.

S1102: The second device performs beamforming on a RIS in the second device based on the control information.

In an embodiment, some of the antenna units in the RIS support RIS reflection, and the remaining antenna units support RIS refraction. That the second device performs beamforming on the RIS in the second device may be understood as: the second device may adjust phases and amplitudes of the antenna units supporting RIS reflection based on phases and amplitudes of the antenna units in the RIS reflection parameter, and the second device may adjust phases and amplitudes of the antenna units supporting RIS refraction based on phases and amplitudes of the antenna units in the RIS refraction parameter. It should be understood that the beam of the RIS after the beamforming points at the target. For example, the second device may reflect the sensing signal to the target, and may further receive the echo signal from the target.

S1103: The first device sends a sensing signal to the second device.

S1104: The second device reflects the sensing signal to a target.

For S1103 and S1104, reference may be made to the related descriptions of S603 and S604. In S1104, the second device may use the antenna units supporting RIS reflection in the RIS to reflect the sensing signal to the target. The second device does not need to process the sensing signal, but instead directly reflects the sensing signal. Therefore, the speed of responding to the sensing signal by the second device can be improved. Further, the delay in sensing the target by the first device is reduced, and the efficiency of collaborative sensing is improved.

S1105: The first device receives an echo signal fed back by the target.

For S1105, reference may be made to the related description of S605.

S1106: The second device receives an echo signal fed back by the target.

S1105 and S1106 are not performed in a sequential order, and may be performed simultaneously. Because the RIS in this embodiment of this application has the RIS refraction capability, the second device may receive the echo signal fed back from the target.

S1107: The first device obtains a first sensing result of the target based on the echo signal.

For S1107, reference may be made to the related description of S606.

S1108: The second device obtains a second sensing result of the target based on the echo signal. S1107 and S1108 are not performed in a sequential order, and may be performed simultaneously. For S1108, reference may be made to the related description of S805.

S1109: The second device sends the second sensing result to the first device.

For S1109, reference may be made to the related description of S806.

S1110: The first device obtains a sensing result of the target based on the first sensing result and the second sensing result.

The first device may fuse the first sensing result and the second sensing result based on a preset fusion rule to obtain the sensing result of the target.

In an embodiment, the preset fusion rule may be that an average of the first sensing result and the second sensing result is the sensing result of the target. For example, if the first device needs to sense the speed of the target, the first sensing result indicates that the speed of the target is V1, and the second sensing result indicates that the speed of the target is V2, the first device may use an average of V1 and V2 as the speed of the target.

In an embodiment, the preset fusion rule may be obtaining the sensing result of the target based on the first sensing result, a weight of the first sensing result, the second sensing result, and a weight of the second sensing result. For example, if the sensing capability of the first device is higher than the sensing capability of the second device, the weight of the first sensing result may be greater than the weight of the second sensing result. For example, if the first device needs to sense the speed of the target, the first sensing result indicates that the speed of the target is V1, the second sensing result indicates that the speed of the target is V2, the weight of the first sensing result is 0.7, and the weight of the second sensing result is 0.3, the speed of the target may be (0.7V1+0.3V2)/2.

The preset fusion rule is not specifically limited in this embodiment of this application, and the foregoing preset fusion rules are examples.

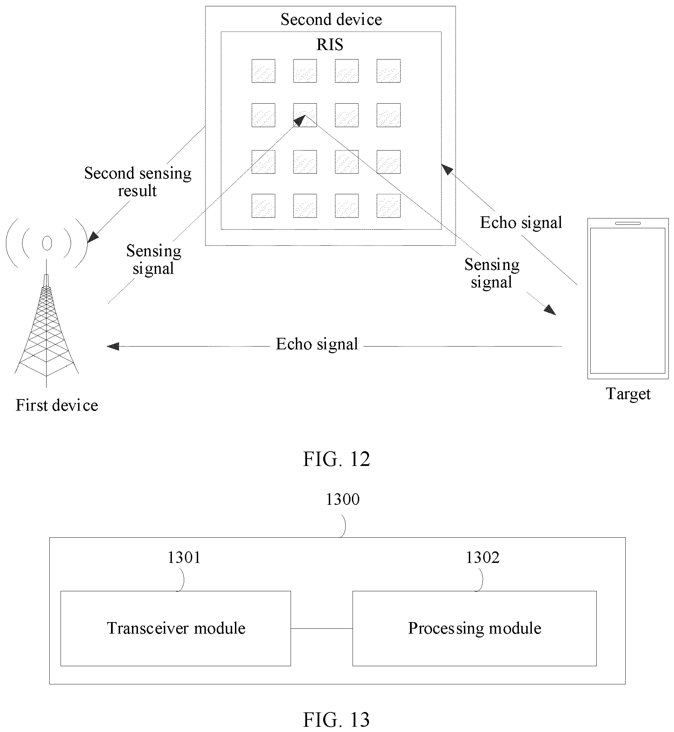

FIG. 12 is a schematic diagram of signal transmission corresponding to FIG. 11. Referring to FIG. 12, a first device is a base station, a second device and a target are mobile phones, and a RIS is integrated in the second device. Based on the foregoing steps S1101 and S1102, the second device may adjust the phases and the amplitudes of the antenna units in the RIS. The first device sends a sensing signal to the second device, the second device may reflect the sensing signal to the target based on the RIS reflection capability, and the target may feed back an echo signal in response to the sensing signal. The second device may receive the echo signal based on the RIS refraction capability, and the first device may also receive the echo signal. The second device may obtain a second sensing result based on the echo signal, and send the second sensing result to the first device. The first device may obtain a first sensing result based on the echo signal, and then fuse the first sensing result and the second sensing result to obtain a sensing result of the target.

In this embodiment of this application, in one aspect, the second device does not need to process the sensing signal, but instead directly reflects the sensing signal to the target, which can improve the speed of responding to the sensing signal by the second device, thereby reducing the delay in sensing the target by the first device, and improving the efficiency of collaborative sensing. Reference may be made to the related descriptions of the foregoing embodiments. In another aspect, when there is an obstacle between the first device and the second device, the second device may feed back the sensing result of the target to the first device based on the echo signal, so that the first device senses the target. In another aspect, the first device may fuse the first sensing result and the second sensing result to obtain the sensing result of the target, which implements two-level sensing of the first device and the second device, and can improve the sensing accuracy. The embodiments of this application further have other technical effects in the foregoing embodiments.

Reference may be made to the related descriptions of the foregoing embodiments.

FIG. 13 is a schematic structural diagram of a collaborative sensing apparatus according to an embodiment of this application. The collaborative sensing apparatus 1300 in this embodiment may be the foregoing first device, or may be a chip applied to the first device. The collaborative sensing apparatus 1300 may be configured to perform the operations of the first device in the foregoing method embodiments. As shown in FIG. 13, the collaborative sensing apparatus 1300 may include a transceiver module 1301 and a processing module 1302.

The processing module 1302 is configured to sense a target in collaboration with a second device based on a RIS capability of the second device, where the RIS capability is a RIS reflection capability and/or a RIS refraction capability, the RIS reflection capability is used for representing that the second device supports reflection of a sensing signal from the first device to the target, and the RIS refraction capability is used for representing that the second device supports generation of the sensing signal and sending of the sensing signal to the target.

In a possible implementation, the transceiver module 1301 is configured to send control information to the second device based on the RIS capability, where the control information is used by the second device to perform beamforming on the RIS, and a beam of the RIS after the beamforming points at the target.

In a possible implementation, the control information includes a RIS parameter, where the RIS parameter is related to the RIS capability. The processing module 1302 is further configured to obtain the RIS parameter based on information about the target, where the information about the target includes an identifier, an orientation, or a location of the target.

In a possible implementation, the control information includes information about the target, and the information about the target includes an identifier, an orientation, or a location of the target.

In a possible implementation, when the RIS capability is the RIS reflection capability and the RIS refraction capability, the control information further includes an identifier of the RIS capability, and the identifier of the RIS capability is used for indicating that the second device uses the RIS reflection capability and/or the RIS refraction capability.

In a possible implementation, when the RIS capability is the RIS refraction capability, the control information further includes a sensing requirement, and the sensing requirement includes a sensing purpose, a sensing performance requirement, and a sensing parameter.

In a possible implementation, the RIS capability includes the RIS reflection capability. The transceiver module 1301 is further configured to send the sensing signal to the second device and receive an echo signal from the target; and the processing module 1302 is further configured to obtain a sensing result of the target based on the echo signal.

In a possible implementation, the RIS capability further includes the RIS refraction capability. The transceiver module 1301 is further configured to receive a second sensing result from the second device. The processing module 1302 is further configured to obtain a first sensing result of the target based on the echo signal; and obtain the sensing result based on the first sensing result and the second sensing result.

In a possible implementation, the RIS capability is the RIS refraction capability. The transceiver module 1301 is further configured to receive the sensing result from the second device.

In a possible implementation, the transceiver module 1301 is further configured to receive the RIS capability reported by the second device.

The collaborative sensing apparatus provided in this embodiment of this application can perform the operations of the first device in the foregoing method embodiments, and implementation principles and technical effects thereof are similar, which are not described herein again.

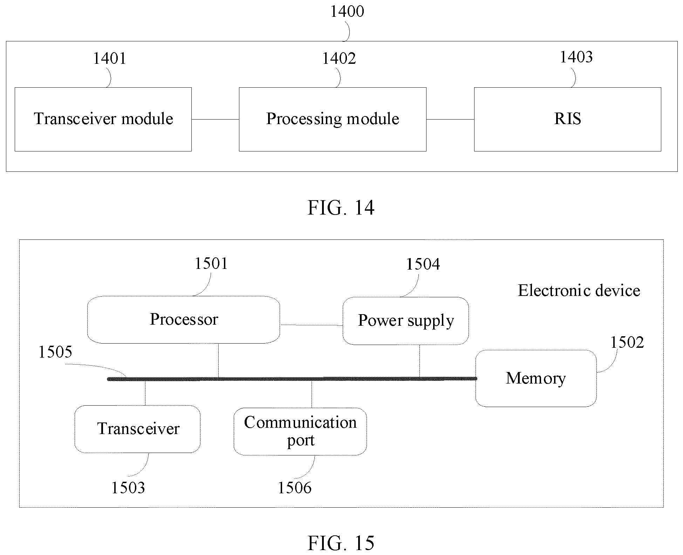

FIG. 14 is a schematic structural diagram of a collaborative sensing apparatus according to an embodiment of this application. The collaborative sensing apparatus 1400 in this embodiment may be the foregoing second device, or may be a chip applied to the second device. The collaborative sensing apparatus 1400 may be configured to perform the operations of the second device in the foregoing method embodiments. As shown in FIG. 14, the collaborative sensing apparatus 1400 may include a transceiver module 1401, a processing module 1402, and a RIS 1403.

The processing module 1402 is configured to sense a target in collaboration with a first device based on a RIS capability of a second device, where the RIS capability is a RIS reflection capability and/or a RIS refraction capability, the RIS reflection capability is used for representing that the second device supports reflection of a sensing signal from the first device to the target, and the RIS refraction capability is used for representing that the second device supports generation of the sensing signal and sending of the sensing signal to the target.

In a possible implementation, the transceiver module 1401 is configured to receive control information from the first device; and the processing module 1402 is further configured to perform beamforming on the RIS based on the control information, where a beam of the RIS after the beamforming points at the target.

In a possible implementation, the processing module 1402 is further configured to obtain a RIS parameter based on the control information, where the RIS parameter is related to the RIS capability; and perform beamforming on the RIS based on the RIS parameter.

In a possible implementation, the control information includes the RIS parameter, the RIS parameter is obtained by the first device based on information about the target, and the information about the target includes an identifier, an orientation, or a location of the target.

In a possible implementation, the control information includes information about the target. The processing module 1402 is further configured to obtain the RIS parameter based on information about the target, where the information about the target includes an identifier, an orientation, or a location of the target.

In a possible implementation, when the RIS capability is the RIS reflection capability and the RIS refraction capability, the control information further includes an identifier of the RIS capability, and the identifier of the RIS capability is used for indicating that the second device uses the RIS reflection capability and/or the RIS refraction capability. The processing module 1402 is further configured to obtain the RIS parameter based on the information about the target and the identifier of the RIS capability.

In a possible implementation, the RIS capability includes the RIS reflection capability. The transceiver module 1401 is configured to receive the sensing signal from the first device; and the RIS 1403 is configured to reflect the sensing signal to the target based on the beam of the RIS.

In a possible implementation, the RIS capability further includes the RIS refraction capability, and the RIS 1403 is configured to receive an echo signal from the target; and the processing module 1402 is further configured to obtain a second sensing result of the target based on the echo signal. The transceiver module 1401 is further configured to send the second sensing result to the first device.

In a possible implementation, the RIS capability is the RIS refraction capability. The processing module 1402 is further configured to generate a sensing signal. The RIS 1403 is further configured to send the sensing signal to the target based on the beam of the RIS and receive an echo signal from the target. The processing module 1402 is further configured to obtain a sensing result of the target based on the echo signal. The transceiver module 1401 is further configured to send the sensing result to the first device.

In a possible implementation, the control information includes a sensing requirement, and the sensing requirement includes a sensing purpose, a sensing performance requirement, and a sensing parameter. The processing module 1402 is further configured to generate the sensing signal based on the sensing requirement.

In a possible implementation, the transceiver module 1401 is further configured to report the RIS capability of the second device to the first device.

The collaborative sensing apparatus provided in this embodiment of this application can perform the operations of the second device in the foregoing method embodiments, and implementation principles and technical effects thereof are similar, which are not described herein again.

It should be noted that, in practical implementations, the transceiver module may be a transceiver, or may include a transmitter and a receiver. The processing module may be implemented in the form of software invoked by a processing element, or implemented in the form of hardware. For example, the processing module may be an independently disposed processing element, or may be integrated in a chip of the foregoing apparatus. In addition, the processing module may be stored in a memory of the foregoing apparatus in the form of program code, and a processing element of the foregoing apparatus invokes and executes a function of the processing module. In addition, all or some of the modules may be integrated together, or may be implemented independently. The processing element may be an integrated circuit and has a signal processing capability. In an implementation process, steps in the foregoing methods or the foregoing modules can be implemented by using a hardware integrated logical circuit in a processor element, or by using instructions in a form of software.

For example, the foregoing modules may be one or more integrated circuits configured to implement the foregoing methods, for example, one or more application-specific integrated circuits (application-specific integrated circuit, ASIC), or one or more digital signal processors (digital signal processor, DSP), or one or more field programmable gate arrays (field programmable gate array, FPGA). In another example, when a module described above is implemented in a form of a processing element scheduling program code, the processing element may be a general-purpose processor, for example, a central processing unit (central processing unit, CPU) or another processor that can invoke program code. In another example, such modules may be integrated together and implemented in a form of a system-on-a-chip (system-on-a-chip, SOC). FIG. 15 is a schematic structural diagram of an electronic device according to an embodiment of this application. The electronic device may be the foregoing first device or second device. As shown in FIG. 15, the electronic device may include a processor 1501 (for example, a CPU), a memory 1502, and a transceiver 1503. The transceiver 1503 is coupled to the processor 1501, and the processor 1501 controls transceiving operations of the transceiver 1503. The memory 1502 may include a high-speed random access memory (random access memory, RAM), or may further include a non-volatile memory (non-volatile memory, NVM), for example, at least one magnetic disk memory. The memory 1502 may store various instructions, which are configured to implement various processing functions and implement the method steps of this application. Optionally, the electronic device in this application may further include a power supply 1504, a communication bus 1505, and a communication port 1506. The transceiver 1503 may be integrated in a transceiver of the electronic device, or may be an independent transceiver antenna on the electronic device. The communication bus 1505 is configured to implement a communication connection between components. The communication port 1506 is configured to implement connection and communication between the electronic device and another peripheral.

In the embodiments of this application, the memory 1502 is configured to store computer-executable program code, where the program code includes instructions. When the processor 1501 executes the instructions, the instructions cause the processor 1501 of the electronic device to perform the processing operations of the terminal device in the foregoing method embodiments, and cause the transceiver 1503 to perform the transceiving operations of the electronic device in the foregoing method embodiments. Implementation principles and technical effects thereof are similar, and details are not described herein again.

All or some of the foregoing embodiments may be implemented by using software, hardware, firmware, or any combination thereof. When software is used for implementation, all or some of the embodiments may be implemented in the form of a computer program product. The computer program product includes one or more computer instructions. When the computer program instructions are loaded and executed on the computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, (SSD)), or the like.

"Plurality of" in this specification means two or more. The term "and/or" used herein describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. In formulas, the character "/" indicates a "division" relationship between the associated objects.

It may be understood that, various reference numerals in the embodiments of this application are merely for differentiation for ease of description, and are not intended to limit the scope of the embodiments of this application.

It should be understood that in the embodiments of this application, an order of sequence numbers of the foregoing processes does not indicate an execution sequence, and execution sequences of the processes should be determined according to functions and internal logics thereof and should not impose any limitation on an implementation process of the embodiments of this application.

## Claims

1. A collaborative sensing method, applicable to a first device, wherein a second device comprises a reconfigurable intelligent surface, RIS, and the method comprises:
sensing a target in collaboration with the second device based on a RIS capability of the second device, wherein the RIS capability is a RIS reflection capability and/or a RIS refraction capability, the RIS reflection capability is used for representing that the second device supports reflection of a sensing signal from the first device to the target, and the RIS refraction capability is used for representing that the second device supports generation of the sensing signal and sending of the sensing signal to the target, wherein before the sensing a target in collaboration with the second device, the method further comprises:
sending (S601, S801, S1101) control information to the second device based on the RIS capability, wherein the control information is used by the second device to perform beamforming on the RIS, and a beam of the RIS after the beamforming points at the target.

2. The method according to claim 1, wherein the control information comprises a RIS parameter, the RIS parameter is related to the RIS capability, and before the sending control information to the second device based on the RIS capability, the method further comprises:
obtaining the RIS parameter based on information about the target, wherein the information about the target comprises an identifier, an orientation, or a location of the target.

3. The method according to claim 1 or 2, wherein the control information comprises information about the target, and the information about the target comprises an identifier, an orientation, or a location of the target.

4. The method according to any one of claims 1 to 3, wherein when the RIS capability is the RIS refraction capability, the control information further comprises a sensing requirement, and the sensing requirement comprises a sensing purpose, a sensing performance requirement, and a sensing parameter.

5. The method according to any one of claims 1 to 4, wherein when the RIS capability is the RIS reflection capability and the RIS refraction capability, the control information further comprises an identifier of the RIS capability, and the identifier of the RIS capability is used for indicating that the second device uses the RIS reflection capability and the RIS refraction capability.

6. The method according to any one of claims 1 to 5, wherein before the sensing a target in collaboration with the second device based on a RIS capability of the second device, the method further comprises:
receiving the RIS capability reported by the second device.

7. A collaborative sensing method, applicable to a second device, wherein the second device comprises a reconfigurable intelligent surface, RIS, and the method comprises:
sensing a target in collaboration with a first device based on a RIS capability, wherein the RIS capability is a RIS reflection capability and/or a RIS refraction capability, the RIS reflection capability is used for representing that the second device supports reflection of a sensing signal from the first device to the target, and the RIS refraction capability is used for representing that the second device supports generation of the sensing signal and sending of the sensing signal to the target, wherein before the sensing a target in collaboration with a first device, the method further comprises:
receiving (S601, S801, S1101) control information from the first device; and
performing beamforming (S602, S802, S1102) on the RIS based on the control information, wherein a beam of the RIS after the beamforming points at the target.

8. The method according to claim 7, wherein the performing beamforming on the RIS based on the control information comprises:
obtaining a RIS parameter based on the control information, wherein the RIS parameter is related to the RIS capability; and
performing beamforming on the RIS based on the RIS parameter.

9. The method according to claim 8, wherein the control information comprises the RIS parameter, the RIS parameter is obtained by the first device based on information about the target, and the information about the target comprises an identifier, an orientation, or a location of the target.

10. The method according to claim 7 or 8, wherein the control information comprises information about the target, the information about the target comprises an identifier, an orientation, or a location of the target, and the obtaining a RIS parameter based on the control information comprises:
obtaining the RIS parameter based on the information about the target.

11. The method according to any one of claims 7 to 10, wherein when the RIS capability is the RIS reflection capability and the RIS refraction capability, the control information further comprises an identifier of the RIS capability, and the identifier of the RIS capability is used for indicating that the second device uses the RIS reflection capability and the RIS refraction capability; and
the obtaining a RIS parameter based on the control information comprises:
obtaining the RIS parameter based on the information about the target and the identifier of the RIS capability.

12. The method according to any one of claims 7 to 11, wherein the RIS capability comprises the RIS reflection capability, and the sensing a target in collaboration with a first device comprises:
receiving the sensing signal from the first device; and
reflecting the sensing signal to the target based on the beam of the RIS.

13. The method according to any one of claims 7 to 12, wherein before the sensing a target in collaboration with a first device based on a RIS capability, the method further comprises:
reporting the RIS capability to the first device.

14. An electronic device, comprising a processor (1501) and a memory (1502), wherein
the memory (1502) is configured to store computer-executable instructions; and
the processor (1501) is configured to execute the computer-executable instructions stored in the memory (1502), to cause the processor (1501) to perform the method according to any one of claims 1 to 13.

15. A computer-readable storage medium, storing a computer program or instructions, the computer program or the instructions, when run, implementing the method according to any one of claims 1 to 14.

## Patentansprüche

1. Ein kollaboratives Erfassungsverfahren, anwendbar auf ein erstes Gerät, wobei ein zweites Gerät eine rekonfigurierbare intelligente Oberfläche (RIS) umfasst, und das Verfahren umfasst:
Ein Ziel in Zusammenarbeit mit dem zweiten Gerät basierend auf einer RIS-Fähigkeit des zweiten Geräts erfassen, wobei die RIS-Fähigkeit eine RIS-Reflexionsfähigkeit und/oder eine RIS-Brechungsfähigkeit ist, die RIS-Reflexionsfähigkeit wird verwendet, um darzustellen, dass das zweite Gerät die Reflexion eines Erfassungssignals vom ersten Gerät zum Ziel unterstützt, und die RIS-Brechungsfähigkeit wird verwendet, um darzustellen, dass das zweite Gerät die Erzeugung des Erfassungssignals und das Senden des Erfassungssignals zum Ziel unterstützt, wobei vor dem Erfassen eines Ziels in Zusammenarbeit mit dem zweiten Gerät das Verfahren weiterhin umfasst:
Senden (S601, S801, S1101) von Steuerinformationen an das zweite Gerät basierend auf der RIS-Fähigkeit, wobei die Steuerinformationen vom zweiten Gerät verwendet werden, um eine Strahlformung auf der RIS durchzuführen, und ein Strahl der RIS nach der Strahlformung auf das Ziel zeigt.

2. Das Verfahren nach Anspruch 1, wobei die Steuerinformationen einen RIS-Parameter umfassen, der RIS-Parameter steht in Zusammenhang mit der RIS-Fähigkeit, und vor dem Senden von Steuerinformationen an das zweite Gerät basierend auf der RIS-Fähigkeit umfasst das Verfahren weiterhin:
Erhalten des RIS-Parameters basierend auf Informationen über das Ziel, wobei die Informationen über das Ziel eine Kennung, eine Orientierung oder einen Standort des Ziels umfassen.

3. Das Verfahren nach Anspruch 1 oder 2, wobei die Steuerinformationen Informationen über das Ziel umfassen, und die Informationen über das Ziel umfassen eine Kennung, eine Orientierung oder einen Standort des Ziels.

4. Das Verfahren nach einem der Ansprüche 1 bis 3, wobei, wenn die RIS-Fähigkeit die RIS-Brechungsfähigkeit ist, die Steuerinformationen weiterhin eine Erfassungsanforderung umfassen, und die Erfassungsanforderung umfasst einen Erfassungszweck, eine Erfassungsleistungsanforderung und einen Erfassungsparameter.

5. Das Verfahren nach einem der Ansprüche 1 bis 4, wobei, wenn die RIS-Fähigkeit die RIS-Reflexionsfähigkeit und die RIS-Brechungsfähigkeit ist, die Steuerinformationen weiterhin eine Kennung der RIS-Fähigkeit umfassen, und die Kennung der RIS-Fähigkeit wird verwendet, um anzuzeigen, dass das zweite Gerät die RIS-Reflexionsfähigkeit und die RIS-Brechungsfähigkeit verwendet.

6. Das Verfahren nach einem der Ansprüche 1 bis 5, wobei vor dem Erfassen eines Ziels in Zusammenarbeit mit dem zweiten Gerät basierend auf einer RIS-Fähigkeit des zweiten Geräts das Verfahren weiterhin umfasst:
Empfangen der von dem zweiten Gerät gemeldeten RIS-Fähigkeit.

7. Eine kollaborative Sensormethode, anwendbar auf ein zweites Gerät, wobei das zweite Gerät eine rekonfigurierbare intelligente Oberfläche (RIS) umfasst, und die Methode umfasst:
Ein Ziel in Zusammenarbeit mit einem ersten Gerät basierend auf einer RIS-Fähigkeit erfassen, wobei die RIS-Fähigkeit eine RIS-Reflexionsfähigkeit und/oder eine RIS-Brechungsfähigkeit ist, die RIS-Reflexionsfähigkeit wird verwendet, um darzustellen, dass das zweite Gerät die Reflexion eines Sensorsignals vom ersten Gerät zum Ziel unterstützt, und die RIS-Brechungsfähigkeit wird verwendet, um darzustellen, dass das zweite Gerät die Erzeugung des Sensorsignals und das Senden des Sensorsignals zum Ziel unterstützt, wobei vor dem Erfassen eines Ziels in Zusammenarbeit mit einem ersten Gerät die Methode weiterhin umfasst:
Empfangen (S601, S801, S1101) von Steuerinformationen vom ersten Gerät; und
Durchführen von Beamforming (S602, S802, S1102) auf der RIS basierend auf den Steuerinformationen, wobei ein Strahl der RIS nach dem Beamforming auf das Ziel zeigt.

8. Die Methode gemäß Anspruch 7, wobei das Durchführen von Beamforming auf der RIS basierend auf den Steuerinformationen umfasst:
Erhalten eines RIS-Parameters basierend auf den Steuerinformationen, wobei der RIS-Parameter mit der RIS-Fähigkeit zusammenhängt; und
Durchführen von Beamforming auf der RIS basierend auf dem RIS-Parameter.

9. Die Methode gemäß Anspruch 8, wobei die Steuerinformationen den RIS-Parameter umfassen, der RIS-Parameter wird vom ersten Gerät basierend auf Informationen über das Ziel erhalten, und die Informationen über das Ziel umfassen einen Bezeichner, eine Orientierung oder einen Standort des Ziels.

10. Die Methode gemäß Anspruch 7 oder 8, wobei die Steuerinformationen Informationen über das Ziel umfassen, die Informationen über das Ziel umfassen einen Bezeichner, eine Orientierung oder einen Standort des Ziels, und das Erhalten eines RIS-Parameters basierend auf den Steuerinformationen umfasst:
Erhalten des RIS-Parameters basierend auf den Informationen über das Ziel.

11. Die Methode gemäß einem der Ansprüche 7 bis 10, wobei, wenn die RIS-Fähigkeit die RIS-Reflexionsfähigkeit und die RIS-Brechungsfähigkeit ist, die Steuerinformationen weiterhin einen Bezeichner der RIS-Fähigkeit umfassen, und der Bezeichner der RIS-Fähigkeit wird verwendet, um anzuzeigen, dass das zweite Gerät die RIS-Reflexionsfähigkeit und die RIS-Brechungsfähigkeit verwendet; und
Das Erhalten eines RIS-Parameters basierend auf den Steuerinformationen umfasst:
Erhalten des RIS-Parameters basierend auf den Informationen über das Ziel und dem Bezeichner der RIS-Fähigkeit.

12. Das Verfahren nach einem der Ansprüche 7 bis 11, wobei die RIS-Fähigkeit die RIS-Reflexionsfähigkeit umfasst und das Erfassen eines Ziels in Zusammenarbeit mit einem ersten Gerät Folgendes umfasst:
Empfangen des Erfassungssignals vom ersten Gerät; und
Reflektieren des Erfassungssignals zum Ziel basierend auf dem Strahl des RIS.

13. Das Verfahren nach einem der Ansprüche 7 bis 12, wobei vor dem Erfassen eines Ziels in Zusammenarbeit mit einem ersten Gerät basierend auf einer RIS-Fähigkeit das Verfahren ferner Folgendes umfasst:
Melden der RIS-Fähigkeit an das erste Gerät.

14. Ein elektronisches Gerät, umfassend einen Prozessor (1501) und einen Speicher (1502), wobei
der Speicher (1502) konfiguriert ist, um computerlesbare Anweisungen zu speichern; und
der Prozessor (1501) konfiguriert ist, die im Speicher (1502) gespeicherten computerlesbaren Anweisungen auszuführen, um den Prozessor (1501) zu veranlassen, das Verfahren nach einem der Ansprüche 1 bis 13 auszuführen.

15. Ein computerlesbares Speichermedium, das ein Computerprogramm oder Anweisungen speichert, wobei das Computerprogramm oder die Anweisungen bei Ausführung das Verfahren nach einem der Ansprüche 1 bis 14 implementieren.

## Revendications

1. Un procédé de détection collaborative, applicable à un premier dispositif, où un second dispositif comprend une surface intelligente reconfigurable, RIS, et le procédé comprend :
détecter une cible en collaboration avec le second dispositif basé sur une capacité RIS du second dispositif, où la capacité RIS est une capacité de réflexion RIS et/ou une capacité de réfraction RIS, la capacité de réflexion RIS est utilisée pour représenter que le second dispositif prend en charge la réflexion d'un signal de détection du premier dispositif vers la cible, et la capacité de réfraction RIS est utilisée pour représenter que le second dispositif prend en charge la génération du signal de détection et l'envoi du signal de détection vers la cible, où avant de détecter une cible en collaboration avec le second dispositif, le procédé comprend en outre :
envoyer (S601, S801, S1101) des informations de contrôle au second dispositif basé sur la capacité RIS, où les informations de contrôle sont utilisées par le second dispositif pour effectuer un façonnage de faisceau sur le RIS, et un faisceau du RIS après le façonnage de faisceau pointe vers la cible.

2. Le procédé selon la revendication 1, où les informations de contrôle comprennent un paramètre RIS, le paramètre RIS est lié à la capacité RIS, et avant d'envoyer des informations de contrôle au second dispositif basé sur la capacité RIS, le procédé comprend en outre :
obtenir le paramètre RIS basé sur des informations concernant la cible, où les informations concernant la cible comprennent un identifiant, une orientation ou une localisation de la cible.

3. Le procédé selon la revendication 1 ou 2, où les informations de contrôle comprennent des informations concernant la cible, et les informations concernant la cible comprennent un identifiant, une orientation ou une localisation de la cible.

4. Le procédé selon l'une quelconque des revendications 1 à 3, où lorsque la capacité RIS est la capacité de réfraction RIS, les informations de contrôle comprennent en outre une exigence de détection, et l'exigence de détection comprend un objectif de détection, une exigence de performance de détection et un paramètre de détection.

5. Le procédé selon l'une quelconque des revendications 1 à 4, où lorsque la capacité RIS est la capacité de réflexion RIS et la capacité de réfraction RIS, les informations de contrôle comprennent en outre un identifiant de la capacité RIS, et l'identifiant de la capacité RIS est utilisé pour indiquer que le second dispositif utilise la capacité de réflexion RIS et la capacité de réfraction RIS.

6. Le procédé selon l'une quelconque des revendications 1 à 5, où avant de détecter une cible en collaboration avec le second dispositif basé sur une capacité RIS du second dispositif, le procédé comprend en outre :
recevoir la capacité RIS rapportée par le second dispositif.

7. Une méthode de détection collaborative, applicable à un deuxième dispositif, où le deuxième dispositif comprend une surface intelligente reconfigurable (RIS), et la méthode comprend :
détecter une cible en collaboration avec un premier dispositif basé sur une capacité RIS, où la capacité RIS est une capacité de réflexion RIS et/ou une capacité de réfraction RIS, la capacité de réflexion RIS est utilisée pour représenter que le deuxième dispositif prend en charge la réflexion d'un signal de détection du premier dispositif vers la cible, et la capacité de réfraction RIS est utilisée pour représenter que le deuxième dispositif prend en charge la génération du signal de détection et l'envoi du signal de détection vers la cible, où avant de détecter une cible en collaboration avec un premier dispositif, la méthode comprend en outre :
recevoir (S601, S801, S1101) des informations de contrôle du premier dispositif ; et
effectuer un façonnage de faisceau (S602, S802, S1102) sur le RIS basé sur les informations de contrôle, où un faisceau du RIS après le façonnage de faisceau pointe vers la cible.

8. La méthode selon la revendication 7, où effectuer un façonnage de faisceau sur le RIS basé sur les informations de contrôle comprend :
obtenir un paramètre RIS basé sur les informations de contrôle, où le paramètre RIS est lié à la capacité RIS ; et
effectuer un façonnage de faisceau sur le RIS basé sur le paramètre RIS.

9. La méthode selon la revendication 8, où les informations de contrôle comprennent le paramètre RIS, le paramètre RIS est obtenu par le premier dispositif basé sur des informations concernant la cible, et les informations concernant la cible comprennent un identifiant, une orientation ou une localisation de la cible.

10. La méthode selon la revendication 7 ou 8, où les informations de contrôle comprennent des informations concernant la cible, les informations concernant la cible comprennent un identifiant, une orientation ou une localisation de la cible, et l'obtention d'un paramètre RIS basé sur les informations de contrôle comprend :
obtenir le paramètre RIS basé sur les informations concernant la cible.

11. La méthode selon l'une quelconque des revendications 7 à 10, où lorsque la capacité RIS est la capacité de réflexion RIS et la capacité de réfraction RIS, les informations de contrôle comprennent en outre un identifiant de la capacité RIS, et l'identifiant de la capacité RIS est utilisé pour indiquer que le deuxième dispositif utilise la capacité de réflexion RIS et la capacité de réfraction RIS ; et
l'obtention d'un paramètre RIS basé sur les informations de contrôle comprend :
obtenir le paramètre RIS basé sur les informations concernant la cible et l'identifiant de la capacité RIS.

12. Le procédé selon l'une quelconque des revendications 7 à 11, dans lequel la capacité RIS comprend la capacité de réflexion RIS, et la détection d'une cible en collaboration avec un premier dispositif comprend :
la réception du signal de détection provenant du premier dispositif ; et
la réflexion du signal de détection vers la cible en fonction du faisceau du RIS.

13. Le procédé selon l'une quelconque des revendications 7 à 12, dans lequel, avant la détection d'une cible en collaboration avec un premier dispositif basée sur une capacité RIS, le procédé comprend en outre :
le rapport de la capacité RIS au premier dispositif.

14. Un dispositif électronique, comprenant un processeur (1501) et une mémoire (1502), dans lequel
la mémoire (1502) est configurée pour stocker des instructions exécutables par ordinateur ; et
le processeur (1501) est configuré pour exécuter les instructions exécutables par ordinateur stockées dans la mémoire (1502), pour amener le processeur (1501) à effectuer le procédé selon l'une quelconque des revendications 1 à 13.

15. Un support de stockage lisible par ordinateur, stockant un programme informatique ou des instructions, le programme informatique ou les instructions, lorsqu'ils sont exécutés, mettant en œuvre le procédé selon l'une quelconque des revendications 1 à 14.
